# EUROPEAN PATENT APPLICATION

(11) **EP 4 518 375 A1**
(43) Date of publication of application: **05.03.2025**
(21) Application number: 23814760.7
(22) Date of filing: 04.04.2023
(51) Int. Cl.: H04W 4/80, H04W 68/02, H04W 4/18

(54) **PAGING METHOD AND APPARATUS**

(30) Priority: 30.05.2022 CN 202210605628
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); WU, Yiling, Shenzhen, Guangdong 518129 (CN)
(74) Representative: Goddar, Heinz J.
(86) International application number: PCT/CN2023/086230
(87) International publication number: WO 2023/231564

(57) **Abstract**

This application provides a paging method and an apparatus, and relates to the field of communication technologies. In the paging method, a first core network device may send first signaling to a first device, indicating the first device to page a terminal device; and the first device may send second signaling, where the second signaling may indicate information about a first flag, and the information about the first flag indicates that a type of a flag of a to-be-paged terminal device is a first type and/or a state of the flag is a first state, to determine the to-be-paged terminal device. In this way, a mechanism for paging the terminal device is provided, and there is no need to specifically determine which terminal device is to be paged. This helps simplify a process of paging the terminal device.

## Description

### CROSS-REFERENCE TO RELATED APPLICATIONS

This application claims priority to Chinese Patent Application No. 202210605628.9, filed with the China National Intellectual Property Administration on May 30, 2022 and entitled "PAGING METHOD AND APPARATUS", which is incorporated herein by reference in its entirety.

### TECHNICAL FIELD

Embodiments of this application relate to the field of communication technologies, and in particular, to a paging method and an apparatus.

### BACKGROUND

A radio frequency identification (radio frequency identification, RFID) system includes an RFID tag (briefly referred to as a tag) and a reader/writer. The reader/writer may establish communication with a tag within communication coverage of the reader/writer. The reader/writer may further perform a read operation, a write operation, and the like on the tag.

Currently, it is considered that the tag is to be connected to a cellular network. However, how to page the tag in the cellular network is an urgent problem to be resolved.

### SUMMARY

This application provides a paging method and an apparatus, to provide a mechanism for paging a tag.

According to a first aspect, an embodiment of this application provides a paging method. The method may be performed by a first device, or may be performed by a chip system. The chip system may implement a function of the first device. Descriptions are provided below by using an example in which the method is performed by the first device. The method includes: receiving first signaling from a first core network device, where the first signaling is for paging a terminal device; and sending second signaling, where the second signaling indicates information about a first flag of a to-be-paged terminal device, the information about the first flag indicates that a type of the first flag is a first type and/or a state of the first flag is a first state, and the information about the first flag is for determining the to-be-paged terminal device.

In this embodiment of this application, the first device may send the second signaling, and the second signaling indicates the first type and/or the first state of the to-be-paged terminal device, so that after receiving the second signaling, a terminal device may determine whether the terminal device is the terminal device to be paged this time. For example, a terminal device is a tag. This is equivalent to that this embodiment of this application provides a mechanism for paging a tag. In this embodiment of this application, the first device may page a terminal device based on a type and/or state of a flag, and the core network device or the first device does not need to determine a specific terminal device that needs to be paged. This helps simplify a paging process. In addition, the tag is configured with information such as a type and state of a corresponding flag. Therefore, in this embodiment of this application, paging on the tag can be implemented without changing the tag. This helps reduce costs for paging the tag, and facilitate compatibility with a conventional technology. In addition, in this embodiment of this application, a plurality of terminal devices that meet an indication of the second signaling may be paged. This provides a manner supporting batch paging.

In a possible implementation, the first signaling further indicates the first type and/or the first state.

In this implementation, the first core network device may indicate the first type and/or the first state to the first device, so that the first device does not need to determine the first type and/or the first state. This reduces a processing amount of the first device.

In a possible implementation, the first signaling includes at least one of the following information: frequency information, where the frequency information indicates a frequency at which the first device pages a terminal device; quantity-of-times information, where the quantity-of-times information indicates a quantity of times that the first device pages a terminal device; accuracy information, where the accuracy information indicates a ratio of a quantity of terminal devices that successfully page the first device to a quantity of terminal devices that page the first device; quantity information, where the quantity information indicates an order of magnitude of a terminal device that expects to page the first device; or paging time information, where the paging time information indicates start time and/or end time at which the first device performs paging.

In this implementation, the first signaling may implicitly indicate the first type and/or the first state. For example, the first signaling indicates one or more of the following information: the frequency information, the quantity-of-times information, the accuracy information, the quantity information, and the paging time information. In this way, the first device may determine the first type and/or the first state based on the information in the first signaling. In addition, because the information reflects a service requirement to some extent, the first type and/or the first state determined by the first device based on the information better meets the service requirement.

In a possible implementation, the method further includes: randomly determining, from a plurality of types of flags, a type as the first type; and/or the first state being an initial state of the first flag.

In this implementation, the first device may randomly determine the first type from the plurality of types of the flags, so that the first device may flexibly determine the first type. In addition, the first device may further determine the initial state of the first flag as the first state, so that a manner in which the first device determines the first state is simple.

In a possible implementation, the method further includes: sending third signaling based on a first quantity of terminal devices paged by the first device via the second signaling, where the third signaling indicates information about a second flag of a terminal device to be paged next time, the information about the second flag includes that a type of the second flag is a second type and/or a state of the second flag is a second state, and the third signaling is for determining the terminal device to be paged next time.

In this implementation, when the first device determines the first type and/or the first tag, the first device may determine, based on a quantity of terminal devices that page the first device this time, information about a flag of a terminal device to be paged next time. For example, if the quantity of terminal devices that page the first device this time is greater than a first threshold, it indicates that a plurality of terminal devices are more likely to send uplink data to the first device in a same time unit (that is, the plurality of terminal devices are more likely to collide). Therefore, the first device may adjust the information about the flag of the terminal device to be paged next time to be different from information about a flag of a terminal device paged this time, to help reduce collisions between the plurality of terminal devices.

In a possible implementation, the method further includes: The second signaling further indicates action information, and the action information indicates to change the state of the first flag of the terminal device.

In this implementation, the second signaling may further indicate to change a state of a flag of a terminal device, so that the first device accesses a terminal device whose state of a flag better meets a requirement.

In a possible implementation, the method further includes: sending fourth signaling, where the fourth signaling indicates action information, and the action information indicates to change the state of the first flag of the terminal device, and/or indicates that the state of the first flag is the first state.

In this implementation, the first device may use the fourth signaling to indicate the action information, and/or indicate the terminal device whose state of the first flag is the first state to perform access, so that indication is performed without using the second signaling. In this way, the first device can perform indication more flexibly.

In a possible implementation, the second signaling further indicates a maximum time unit range in which the to-be-paged terminal device sends data to the first device; or the method further includes: sending fifth signaling, where the fifth signaling indicates a maximum time unit range in which the to-be-paged terminal device sends data to the first device.

In this implementation, a possible manner in which the first device indicates a time domain resource to the terminal device is provided. For example, the first device may indicate the maximum time unit range via the second signaling. This reduces a quantity of times of interaction between the terminal device and the first device. Alternatively, for example, the first device may indicate the maximum time unit range via the fifth signaling. This helps the first device indicate a maximum time unit range of one terminal device more flexibly.

In a possible implementation, the first signaling is non-access stratum signaling.

In this implementation, the first core network device may directly send the first signaling to the terminal device through the first device, and the first device does not need to sense content of the first signaling. This helps reduce the processing amount of the first device.

According to a second aspect, an embodiment of this application provides a paging method. The method may be performed by a first terminal device, or may be performed by a chip system. The chip system may implement a function of the first terminal device. Descriptions are provided below by using an example in which the method is performed by the first terminal device. The method includes: receiving second signaling from a first device, where the second signaling indicates information about a first flag of a to-be-paged terminal device, the information about the first flag indicates that a type of the first flag is a first type and/or a state of the first flag is a first state, and the information about the first flag is for determining the to-be-paged terminal device.

In a possible implementation, the second signaling indicates to change the state of the first flag of the terminal device.

In a possible implementation, the method further includes: receiving fourth signaling from the first device, where the fourth signaling indicates action information, and the action information indicates to change the state of the first flag of the terminal device, and/or indicates that the state of the first flag is the first state.

In a possible implementation, the method further includes: receiving third signaling from the first device, where the third signaling indicates information about a second flag of a terminal device to be paged next time, the information about the second flag includes that a type of the second flag is a second type and/or a state of the second flag is a second state, the third signaling is for determining the terminal device to be paged next time, and the information about the second flag is determined based on a first quantity of terminal devices paged by the first device via the second signaling.

According to a third aspect, an embodiment of this application provides a paging method. The method may be performed by a first core network device, or may be performed by a chip system. The chip system may implement a function of the first core network device. Descriptions are provided below by using an example in which the method is performed by the first core network device. The method includes: sending first signaling to a first device, where the first signaling indicates information about a first flag, the information about the first flag indicates that a type of the first flag is a first type and/or a state of the first flag is a first state, and the information about the first flag is for determining a to-be-paged terminal device.

In a possible implementation, seventh signaling from a second core network device is received, where the seventh signaling is for paging a terminal device. In this implementation, the first core network device may be triggered by the second core network device to page a terminal device.

In a possible implementation, the first signaling includes at least one of the following information: frequency information, where the frequency information indicates a frequency at which the first device pages a terminal device; quantity-of-times information, where the quantity-of-times information indicates a quantity of times that the first device pages a terminal device; accuracy information, where the accuracy information indicates a ratio of a quantity of terminal devices that are successfully paged by the first device to a quantity of terminal devices that are paged by the first device; quantity information, where the quantity information indicates an order of magnitude of a terminal device expected to be paged by the first device; or paging time information, where the paging time information indicates start time and/or end time at which the first device performs paging.

In a possible implementation, the first signaling is non-access stratum signaling.

In a possible implementation, the method further includes: sending sixth signaling to a second device, where the sixth signaling indicates information about a second flag of the to-be-paged terminal device, the information about the second flag indicates that a type of the second flag is a second type and/or a state of the second flag is a second state, the information about the second flag is for determining the to-be-paged terminal device, and the information about the second flag is determined based on the information about the first flag.

In this implementation, the information about the second flag may also be understood as indicating a terminal device that meets the information about the second flag to access the second device. Communication coverage of the second device and communication coverage of the first device may partially overlap. In this implementation, the first core network device may determine, based on the information about the first flag used by the first device for paging, the information about the second flag used by the second device for paging. This reduces a possibility that the first device and the second device repeatedly page some terminal devices.

In a possible implementation, an absolute value of a time difference between a third moment and a second moment is less than duration for keeping a state obtained by reversing the state of the first flag that is of the first type, and/or an absolute value of a time difference between a third moment and a second moment is less than duration for keeping a state obtained by reversing the first state, where the second moment is a moment at which the first core network device sends the sixth signaling to the second device, and the third moment is a moment that is determined by the first core network device and at which the first device completes a process that is of paging a terminal device and that is indicated by the first signaling.

In this implementation, the information about the first flag may be the same as the information about the second flag, and the first core network device does not need to indicate action information to the second device. This provides a manner in which the first core network device adjusts a plurality of devices to page a UE, and reduces a processing amount of the first core network device.

In a possible implementation, the second device is neighboring to the first device, or an access network device serving the first device is neighboring to or the same as an access network device serving the second device.

In this implementation, the first device and the second device are devices of a same type. For example, when both the first device and the second device are access network devices, the first device and the second device may be two neighboring access network devices. For another example, when both the first device and the second device are terminal devices or access nodes, an access network device serving the first device may be the same as or neighboring to an access network device serving the second device. For another example, the first device and the second device may be two cells of one access network device, and the two cells may be neighboring cells.

In a possible implementation, the first device may be replaced with a first cell, and the second device may be replaced with a second cell.

According to a fourth aspect, an embodiment of this application provides a communication apparatus. The communication apparatus may be the first device in the first aspect, an electronic device (for example, the chip system) disposed in the first device, or a large device including the first device. The first device includes a corresponding means (means) or module configured to perform the first aspect or any possible implementation. For example, the communication apparatus includes a receiving module (also referred to as a receiving unit sometimes) and a sending module (also referred to as a sending unit sometimes).

For example, a receiving module, configured to receive first signaling from a first core network device, where the first signaling is for paging a terminal device; and a sending module, configured to send second signaling, where the second signaling indicates information about a first flag of a to-be-paged terminal device, the information about the first flag indicates that a type of the first flag is a first type and/or a state of the first flag is a first state, and the information about the first flag is for determining the to-be-paged terminal device.

In a possible implementation, the receiving module and the sending module may be coupled.

In a possible implementation, the communication apparatus includes a storage unit. The processing unit can be coupled to the storage unit, and execute a program or instructions in the storage unit, to enable the communication apparatus to perform a function of the first device.

According to a fifth aspect, an embodiment of this application provides a communication apparatus. The communication apparatus may be the first terminal device in the second aspect, an electronic device (for example, the chip system) disposed in the first terminal device, or a large device including the first terminal device. The first terminal device includes a corresponding means (means) or module configured to perform the second aspect or any possible implementation. For example, the communication apparatus includes a processing module (also referred to as a processing unit sometimes) and a transceiver module (also referred to as a transceiver unit sometimes).

For example, the transceiver module is configured to receive, under control of the processing module, second signaling from a first device, where the second signaling indicates information about a first flag of a to-be-paged terminal device, the information about the first flag indicates that a type of the first flag is a first type and/or a state of the first flag is a first state, and the information about the first flag is for determining the to-be-paged terminal device.

In an optional implementation, the communication apparatus includes a storage unit. The processing unit can be coupled to the storage unit, and execute a program or instructions in the storage unit, to enable the communication apparatus to perform a function of the first terminal device.

According to a sixth aspect, an embodiment of this application provides a communication apparatus. The communication apparatus may be the first core network device in the third aspect, an electronic device (for example, the chip system) disposed in the first core network device, or a large device including the first core network device. The first core network device includes a corresponding means (means) or module configured to perform the third aspect or any possible implementation. For example, the communication apparatus includes a transceiver module (also referred to as a transceiver unit sometimes) and a processing module (also referred to as a processing unit sometimes).

For example, the transceiver module is configured to send, under control of the processing module, first signaling to a first device, where the first signaling indicates information about a first flag, the information about the first flag indicates that a type of the first flag is a first type and/or a state of the first flag is a first state, and the information about the first flag is for determining a to-be-paged terminal device.

In a possible implementation, the receiving module and the sending module may be coupled.

In an optional implementation, the communication apparatus includes a storage unit. The processing unit can be coupled to the storage unit, and execute a program or instructions in the storage unit, to enable the communication apparatus to perform a function of the first core network device.

According to a seventh aspect, an embodiment of this application provides a communication apparatus, including a processor and a communication interface, where the communication interface is configured to receive a signal from a communication apparatus other than the communication apparatus and transmit the signal to the processor, or send a signal from the processor to a communication apparatus other than the communication apparatus, and the processor is configured to implement the method according to any one of the first aspect to the third aspect by using a logic circuit or executing code instructions.

According to an eighth aspect, an embodiment of this application provides a computer-readable storage medium. The computer-readable storage medium stores a computer program or instructions, and when the computer program or the instructions are executed by a communication apparatus, the method according to any one of the first aspect to the third aspect is implemented.

According to a ninth aspect, a computer program product including instructions is provided. When the computer program product is run on a computer, the method according to any one of the first aspect to the third aspect is implemented.

For beneficial effects of the second aspect to the ninth aspect, refer to the beneficial effects described in the first aspect. Details are not listed herein.

### BRIEF DESCRIPTION OF DRAWINGS

FIG. 1 to FIG. 3 are diagrams of three application scenarios according to embodiments of this application;
FIG. 4 is a schematic flowchart of a paging method according to an embodiment of this application;
FIG. 5 is a diagram of a change process of a state of a flag according to an embodiment of this application;
FIG. 6 and FIG. 7 are schematic flowcharts of two paging methods according to embodiments of this application; and
FIG. 8 to FIG. 13 are diagrams of structures of several communication apparatuses according to embodiments of this application.

### DESCRIPTION OF EMBODIMENTS

To make objectives, technical solution, and advantages of embodiments of this application clearer, the following further describes embodiments of this application in detail with reference to the accompanying drawings.

The following describes some terms or concepts in embodiments of this application, to facilitate understanding of a person skilled in the art.
1. An RFID tag in embodiments of this application may also be referred to as an electronic tag or a tag. A design of the tag is simple. Application layer signaling and air interface signaling are integrated to design the tag. The tag mainly performs encoding/decoding and transmission based on binary on-off keying (on-off keying, OOK). In other words, in an amplitude modulation mode of data, the data is decoded by using a high/low level. In a communication process of the tag, distinguishing between frequency domain and code domain is not supported, and parallel performance is poor. For example, if a plurality of tags need to communicate with a reader/writer, a time division multiplexing manner may be used, and the plurality of tags communicate with the reader/writer by using a serial process. The tag may be considered as a terminal device.
   In addition, radio frequency identification technologies may be classified into three types: active, passive, and semi-active. A tag in the active radio frequency identification technology may be referred to as an active tag and may have a built-in battery, and such a tag may actively send a signal to the reader/writer without obtaining, based on a received signal, energy for sending the signal. A tag in the passive radio frequency identification technology may also be referred to as a passive internet of things (passive IoT), that is, a passive internet of things device. Such a tag may also be referred to as a passive tag and may not have a built-in module such as a battery, or a battery module is in a low battery level. The tag may obtain energy by using a received signal, and send a signal by using the energy. It may be understood as that the passive tag works in a backscatter communication scenario. In other words, the passive tag obtains energy by backscattering a signal from the reader/writer, to perform data transmission. A tag in the semi-active radio frequency identification technology may also be referred to as a semi-active tag, integrates advantages of the active tag and the passive tag, and may be used as a special marker. In normal cases, such a tag is in a dormant state, may not work and not send a signal to the outside. The tag starts to work only in a case in which the tag is activated when entering an activated signal range of a low-frequency activator. The tag in embodiments of this application may be an active tag, a passive tag, a semi-active tag, or the like.
2. A reader/writer in embodiments of this application is a device reading (or writing) tag information in a handheld manner or a fixed manner. Alternatively, the reader/writer may be understood as a device communicating with a tag. The reader/writer is, for example, a reader (reader), an interrogator (interrogator), a scanner (scanner), a reader/writer (reader/writer), a reading device (reading device), or a portable readout device (portable readout device). An implementation form of the reader/writer may be a terminal device, may be an access network device, for example, a base station, or may be a device having a read/write function.
3. An integrated access backhaul (integrated access backhaul, IAB) node (node)/helper (helper)/excitation source in embodiments of this application may be implemented through a terminal device, or may be implemented through an access network device (for example, a base station). Bidirectional communication may be performed between the IAB node and the tag. Alternatively, only downlink data may exist between the IAB node and the tag, in other words, the IAB node can send information to the tag, but the tag cannot send information to the IAB node. Bidirectional communication may be performed between the IAB node and the reader/writer, and the communication may be transferred through an air interface, or may be transferred in a wired manner.
4. A terminal device in embodiments of this application is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. For example, the tag may be a fixed device or mobile device in the terminal device, or a wireless apparatus built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, a smart office, smart wearable, smart transportation, a smart city (smart city), an unmanned aerial vehicle, and a robot. The terminal device may be sometimes referred to as a user equipment (user equipment, UE), a terminal, an access station, a UE station, a remote station, a wireless communication device, a user apparatus, or the like.
5. A network device in embodiments of this application may include, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequent evolved base station in the 3rd generation partnership project (3rd generation partnership project, 3GPP), an access node (access point, AP), a wireless relay node, a wireless backhaul node, or the like in a wireless fidelity (wireless fidelity, Wi-Fi) system, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be a roadside unit (roadside unit, RSU). The following describes the communication between the access network device and the terminal device by using an example in which the access network device is a base station. The base station may communicate with the terminal device, or may communicate with the terminal device via the relay station. The terminal device may communicate with a plurality of base stations in different access technologies. The core network device is configured to implement functions such as mobility management, data processing, session management, and policy and charging. Names of devices that implement core network functions in systems using different access technologies may be different. This is not limited in embodiments this application. A 5G system is used as an example. The core network device includes an access and mobility management function (access and mobility management function, AMF), a session management function (session management function, SMF), a network exposure function (network exposure function, NEF), an application function (application function, AF), a user plane function (user plane function, UPF), or the like. The AF may also be considered as a third-party application server, which is referred to as an application server for short.

In embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. In text descriptions of this application, the character "/" generally indicates an "or" relationship between associated objects. "Including at least one of A, B, and C" may indicate: including A; including B; including C; including A and B; including A and C; including B and C; and including A, B, and C.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first signaling and second signaling do not indicate a difference in content, information amounts, sending sequences, transmit ends/receive ends, priorities, importance, or the like of the two pieces of signaling.

The technical solutions provided in embodiments of this application may be applied to a 3rd generation (3rd generation, 3G) communication system, for example, a universal mobile telecommunications system (universal mobile telecommunications system, UMTS), or may be applied to a 4th generation (4th generation, 4G) communication system, for example, a long term evolution (long term evolution, LTE) system, or may be applied to a 5th generation (5th generation, 5G) communication system, for example, new radio (new radio, NR), or may be applied to a future communication system, for example, a 6th generation (6th generation, 6G) system, or may be applied to a wireless local area network (wireless local area network, WLAN) communication system or the like.

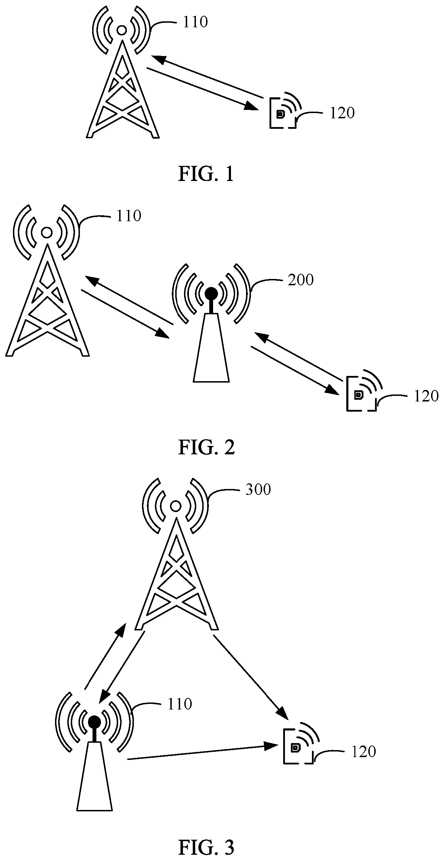

FIG. 1 is a diagram of an application scenario according to an embodiment of this application. FIG. 1 includes an intermediate device 110 and a terminal device 120. The intermediate device 110 is, for example, an access network device (for example, a base station or an access node), where the access network device may implement a function of a reader/writer, or may not implement a function of a reader/writer. Alternatively, the intermediate device 110 is, for example, a terminal device, where the terminal device implements a function of a reader/writer. Alternatively, the intermediate device 110 is, for example, a cell of an access network device. Alternatively, the intermediate device 110 in this embodiment of this application may be replaced with a cell.

If the intermediate device 110 is a base station, the terminal device 120 may communicate with the intermediate device 110 through a Uu interface; or if the intermediate device 110 is an access node, the terminal device 120 may communicate with the intermediate device 110 over a sidelink (sidelink, SL). In addition, if the intermediate device 110 is a terminal device, the intermediate device 110 may further be connected to the access network device, and perform communication through a Uu interface. For example, the intermediate device 110 communicates with a core network through the access network device.

FIG. 2 is a diagram of another application scenario according to an embodiment of this application. FIG. 2 includes an intermediate device 110, an IAB node 200, and a terminal device 120. As shown in FIG. 2, bidirectional communication may be performed between the IAB node 200 and the terminal device 120. Alternatively, only unidirectional communication may be performed between the IAB node 200 and the terminal device 120.

If bidirectional communication may be performed between the IAB node 200 and the terminal device 120, the IAB node 200 may be considered as a relay node between the intermediate device 110 and the terminal device 120, and both uplink and downlink data of the terminal device 120 may be forwarded via the IAB node 200.

Alternatively, if only unidirectional communication may be performed between the IAB node 200 and the terminal device 120, for example, the IAB node 200 may send information to the terminal device 120, but the terminal device 120 cannot send information to the IAB node 200, during downlink data transmission, the IAB node 200 may be considered as a relay node between the intermediate device 110 and the terminal device 120, and downlink data from the intermediate device 110 may arrive at the terminal device 120 after being forwarded via the IAB node 200; and during uplink data transmission, the terminal device 120 may directly send uplink data to the intermediate device 110 without using the IAB node 200. For an implementation form of the intermediate device 110 in FIG. 2, refer to the content described in FIG. 1.

FIG. 3 is a diagram of still another application scenario according to an embodiment of this application. FIG. 3 includes an intermediate device 110, an access network device 300, and a terminal device 120. It should be noted that, in FIG. 3, an example in which the intermediate device 110 is not an access network device is used. For example, the intermediate device 110 in FIG. 3 is a terminal device or an access node. For example, the intermediate device 110 may directly communicate with the terminal device 120, or the intermediate device 110 may communicate with the terminal device 120 through the access network device 300. The intermediate device 110 and/or the access network device 300 can be connected to a core network.

It should be noted that, in the embodiments shown in FIG. 1 to FIG. 3, that there is one intermediate device 110 is used as an example. Actually, there may be a plurality of intermediate devices 110. When there are a plurality of intermediate devices 110, communication coverage of two of the plurality of intermediate devices 110 may partially overlap, or may completely overlap, or completely do not overlap. When there are a plurality of intermediate devices 110, the plurality of intermediate devices 110 may be sequentially referred to as a first device, a second device, and the like.

To better describe embodiments of this application, the following describes methods provided in embodiments of this application with reference to the accompanying drawings. In the accompanying drawings corresponding to embodiments of this application, all optional steps are represented by dashed lines. The methods provided in embodiment of this application may be applied to a scenario shown in any one of FIG. 1 to FIG. 3. For example, for implementations of the first device and the second device in embodiments of this application, refer to the intermediate device 110 shown in any one of FIG. 1 to FIG. 3. For details, refer to the foregoing descriptions. The terminal device in embodiments of this application is, for example, the terminal device 120 shown in any one of FIG. 1 to FIG. 3, and embodiments of this application are described by using an example in which the terminal device is a UE. In addition, embodiments of this application further relate to a first core network device and a second core network device, which are not shown in FIG. 1 to FIG. 3. For example, the first core network device is an access and mobility management function (access and mobility management function, AMF) or a session management function (session management function, SMF), and the second core network device is an application server, an application function (application function, AF), a network exposure function (network exposure function, NEF), or an SMF. In embodiments of this application, an example in which the first core network device is an AMF and the second core network device is an AF is used. One core network device and the other core network device may communicate with each other, and the core network device and the access network device may communicate with each other. For example, the access network device and the AMF may communicate with each other, and the AMF and the AF may communicate with each other.

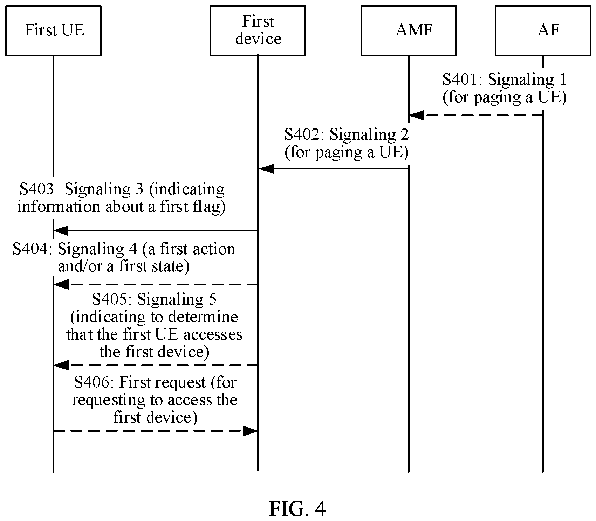

An embodiment of this application provides a paging method. FIG. 4 is a flowchart of the method.

S401: An AF sends signaling 1 to an AMF. Correspondingly, the AMF receives the signaling 1 from the AF. The signaling 1 is for paging a UE. The signaling 1 in this embodiment of this application may also be referred to as seventh signaling.

For example, the AF may directly send the signaling 1 to the AMF. For example, the AF may send the signaling 1 to the AMF through a service-oriented interface of the AMF, where the service-oriented interface of the AMF is, for example, a Namf interface. Alternatively, the AF may send the signaling 1 to the AMF through another core network device, where the another core network device is, for example, an SMF.

The signaling 1 is, for example, application layer paging (or inventory) signaling. Alternatively, the signaling 1 is, for example, similar to a paging (paging) message in a cellular network. The signaling 1 may be for paging a UE; the signaling 1 may be for selecting a UE; the signaling 1 may indicate (or trigger) a UE to perform access; the signaling 1 may indicate (or trigger) a UE to send uplink data; the signaling 1 may indicate (or trigger) a UE to establish a connection to a network (for example, an access network device); the signaling 1 may indicate to a UE to perform access; or the signaling 1 may be for indicating (or triggering) a UE to initiate random access or the like. In this embodiment of this application, that the signaling 1 is for paging a UE is used as an example. The UE paged via the signaling 1 may be referred to as a to-be-paged UE, or may be referred to as a UE that is to perform access (or inventory, or inventory), or the like.

The AF may initiate, to the AMF in a plurality of rounds, signaling that is for paging a UE (for example, the AF may send, to the AMF for a plurality of times, the signaling that is for paging a UE, and one time is considered as one round). For ease of differentiation, in this embodiment of this application, paging initiated via the signaling 1 is considered as a current round of paging, and may also be referred to as an N^{th} round of paging.

In an example, the signaling 1 may indicate information about a first flag (flag) of the to-be-paged UE, and an objective of paging a UE may be achieved by indicating the information about the first flag. Alternatively, the signaling 1 may be for paging a UE, and may further indicate information about a first flag of the to-be-paged UE. The information about the first flag is for determining (or selecting (selecting), or paging) a UE. For example, if information about a flag of a UE meets the information that is about the first flag and that is indicated by the signaling 1, the UE may be paged.

The flag may also be referred to as an inventoried flag (inventoried flag), an inventoried flag, an inventoried flag, a selection flag, or the like. The flag may be understood as a value pre-stored in the UE, for example, pre-stored in a memory of the UE. Alternatively, the flag may be understood as a value of a piece of information. For example, if the flag is a value of information a, and the information a occupies, for example, one bit (bit), the flag may include two values: "0" and "1". Alternatively, the flag may be understood as a capacitor in the UE.

In an example, one UE may maintain at least one flag, and flags maintained by different UEs may be completely the same, or partially the same, or completely different. The first flag may be a flag of a same type maintained by a plurality of UEs. Based on this, the signaling 1 may indicate the information about the first flag, so that some or all of the plurality of UEs may be paged. For example, the plurality of UEs include a UE 1 and a UE 2. The UE 1 maintains a flag S0 and a flag S1, and the UE 2 maintains the flag S0, the flag S1, a flag S2, and a flag S3. It can be learned that the flag S0 and the flag S1 are flags maintained by both the UE 1 and the UE 2. The first flag indicated by the signaling 1 may be any one of these flags. For example, if the first flag is, for example, the flag S1, the signaling 1 may be used to page the UE 1 and/or the UE 2 by using the information about the first flag (namely, the flag S1).

The information about the first flag may indicate a type of the first flag of the to-be-paged UE (for example, indicate that the type of the first flag of the to-be-paged UE is a first type), and/or indicate a state of the first flag of the to-be-paged UE (for example, indicate that the state of the first flag of the to-be-paged UE is a first state). The first type may be any one of a plurality of types of the flags, and the first state may be any one of a plurality of states of the first flag. This is not limited in this embodiment of this application. The following separately describes the type and state of the flag of the UE.

### 1. Type of the flag

The UE maintains at least one flag, where one flag corresponds to one type, and different flags may be of different types. Alternatively, one flag may correspond to a plurality of types. In this embodiment of this application, an example in which one flag corresponds to one type is mainly used. For example, one UE includes four sessions (a session S0, a session S1, a session S2, and a session S3), where each session may be considered as one flag, and each session may also be considered as one type.

A type of one flag maintained by the UE may be determined based on a value of the flag and/or a hardware structure of the UE. The type of the flag may be represented by a session (session), a section, a flag identifier, or the like.

In an example, when the flag of the UE includes only one type, or the flag of the UE is not classified into types, the signaling 1 may not indicate the type of the first flag, for example, may not indicate the first type.

### 2. State of the flag

The state of the flag may also be referred to as an inventory state, an inventory state, an inventory state, or the like. A state of one flag may be determined based on a value of the flag. One flag may have a plurality of optional states, for example, two states. For example, if the value of the flag is 0, the state of the flag is A; or if the value of the flag is 1, the state of the flag is B. The first state of the first flag may be understood as one of the plurality of states corresponding to the first flag.

A type of one flag maintained by the UE may also be related to a state of the flag. For example, one flag of a type 1 may correspond to a plurality of optional states, and one flag of a type 2 may also correspond to a plurality of optional states. The plurality of states corresponding to the flag of the type 1 and the plurality of states corresponding to the flag of the type 2 may be the same. For example, if a type of one flag is the session S0, a state of the flag may be A or B. For another example, if a type of one flag is the session S1, a state of the flag may also be A or B.

In an implementation, one flag that is of a specific type and that is maintained by the UE may have an initial state (where the initial state may also be referred to as a default state, a default value, a reset state, an initial value, a reset value, or the like). The initial state is, for example, a state corresponding to one flag maintained by the UE when the UE is reset (for example, the UE is powered on). Alternatively, the initial state may be a state kept by one flag maintained by the UE after the UE is powered off. After the UE is powered off, the state of the flag may remain unchanged in a period of time. The period of time may be at a hundred-millisecond level, a second level, or a minute level. This is not limited in this embodiment of this application. A state of one flag that is of a specific type and that is maintained by the UE may be changed from an initial state to a non-initial state. After the change, the state of the flag may be restored to the initial state under a specific condition. The non-initial state is a state other than the initial state in a plurality of states of one flag.

That a state of one flag that is of a specific type and that is maintained by the UE may be changed from an initial state to a non-initial state, or may be changed from a non-initial state to an initial state may be considered as that the state of the flag of the UE is changed. In an example, a state corresponding to one flag of a specific type needs to be switched to another state only under a specific state change condition. The state change condition is a condition needed for one flag of a specific type to be changed from one state to another state.

For example, a state change condition is duration in which the UE keeps the state of the flag that is of the specific type, where the duration may also be referred to as maintenance duration. The maintenance duration may be understood as that after the maintenance duration expires, the UE switches the state of the flag that is of the type to another state.

In an example, a state change condition in which one state of one flag that is of a specific type and that is maintained by the UE is changed to another state is different from a state change condition in which the another state of the flag that is of the specific type is changed to the state.

For example, duration in which the session S1 maintained by the UE is kept in the state A under a first condition is different from duration in which the session S1 maintained by the UE is kept in the state B under the first condition. The first condition is a current power status of the UE, for example, the UE is in a power-on state, or the UE is in a power-off state.

In an example, for one state of one flag maintained by the UE, when the flag is of different types, state change conditions corresponding to the state may be the same or different. For a meaning and content of the state change condition, refer to the foregoing descriptions.

For example, for one state of the flag, when the flag is of different types, duration in which the UE keeps the state under the first condition is different.

For example, when the UE is powered off, duration of the state B corresponding to the session S0 maintained by the UE is 0, and duration of the state B corresponding to the session S1 maintained by the UE is in a range of [500 milliseconds (ms), 5 seconds (s)]. When the UE is powered off, the UE can keep the session S1 in the state B within at least 500 ms, and can keep the flag in the state B within at most 5s.

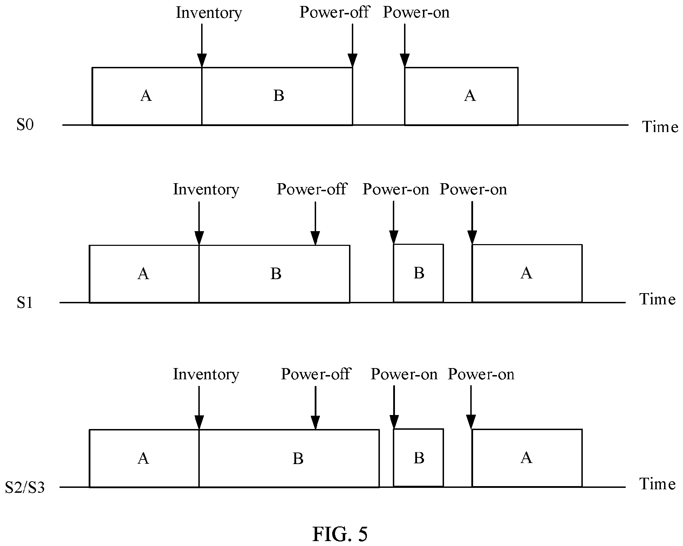

For example, the type of the flag is the first type. The following describes a state change corresponding to the first type. FIG. 5 is a diagram of a change process of a state of a first type according to an embodiment of this application. In FIG. 5, for example, the first type is a session S0, a session S1, a session S2, or a session S3, and a state of each session (that is, a state of a flag) is A or B.
(1) When the first type is the session S0, after a UE is powered on, for example, a state of the session S0 is A. After the UE is identified (or read or written) by a first device once or the UE accesses a first device, the UE changes the state of the session S0 from A to B. If the UE is always in an on state, the UE may keep the state of the session S0, for example, always keep the state of the session S0 as B. If the UE is powered off (or referred to as de-energized), the UE does not store the state of the session S0. In this case, the state of the session S0 is null. Once the UE is powered on again, the UE may determine that the state of the session S0 is A.
(2) When the first type is the session S1, after the UE is powered on, a state of the session S1 is, for example, A or B. After the UE is identified (or read or written) by a first device once, the UE determines that the state of the session S1 is reversed (for example, if the state of the session S1 is A after the UE is powered on, the state of the session S1 is altered from A to B in this case; for another example, if the state of the session S1 is B after the UE is powered on, the state of the session S1 is altered from B to A in this case). After the UE is powered off, the UE may keep the state of the session S1 as B, where duration for keeping the state is in a range of [500 ms, 5s]. After the UE is powered on again, the UE may determine that the state of the session S1 is B. Subsequently, the state of the session S1 may be changed from B to A in specific duration, where a value of the specific duration is not fixed.
(3) A state change of the session S2 is the same as a state change of the session S3. The following uses the session S2 as an example for description. When the first type is the session S2, after the UE is powered on, a state of the session S2 is A or B. After the session S2 of the UE is identified (or read or written) once, the state of the session S2 is reversed. If the UE is always in an on state, the UE may always keep the state of the session S2. After the UE is powered off, duration in which the UE may keep the state of the session S2 is greater than or equal to 2s. For example, the state of the session S2 may be kept for 10s.

In an example, if a plurality of UEs maintain only a same type of flag, a first flag is the flag, and information about the first flag may indicate a state (for example, the first state) of the flag. If a plurality of UEs respectively maintain a plurality of flags, a first flag may be a flag jointly maintained by the plurality of UEs, and information about the first flag may indicate a type (for example, the first type) of the first flag, or information about the first flag may indicate a type (for example, the first type) of the first flag and a state (for example, the first state) of the first flag.

Optionally, an AF may determine information about a first flag of a to-be-paged UE based on a service requirement. Alternatively, an AF may receive information about a first flag of a to-be-paged UE from another core network device (for example, the SMF).

Optionally, the signaling 1 further indicates quantity-of-times information. The quantity-of-times information indicates a quantity of times that the first device pages the UE, and may be further understood as a quantity of times that the first device sends, to the UE, an access instruction that instructs to access the first device. There may be one or more times. The AF may determine the quantity-of-times information based on the service requirement and the like; or the AF may receive the quantity-of-times information from the another core network device (for example, the SMF).

Optionally, the signaling 1 further indicates identification information. The identification information indicates that an identifier of the to-be-paged UE needs to meet the identification information. The identification information indicates the identifier of the to-be-paged UE, or indicates a group identifier corresponding to the to-be-paged UE. The group identifier indicates a plurality of UEs, and some or all of the plurality of UEs are to-be-paged UEs.

Optionally, the signaling 1 further indicates mask (mask) information. The mask information indicates a first mask.

Optionally, the mask information further indicates a storage location, in the UE, of a mask of the to-be-paged UE. The storage location may indicate at least one of information such as a start location, an end location, or a storage length of the mask of the to-be-paged UE in a storage area of the UE. After receiving the mask information, the UE may determine, based on the mask information, a mask at a storage location corresponding to the UE (for ease of differentiation, the mask at the storage location in the UE is referred to as a second mask below). The first mask may be for matching the second mask at the storage location in the UE. For example, if the second mask in the UE matches the first mask, the UE determines to change a state of a first flag of the UE to the first state; or if the second mask in the UE does not match the first mask, the UE determines to change a state of a first flag of the UE to a second state. For example, the mask information is preconfigured (for example, configured by using a protocol) in the AF, and the AF may obtain the mask information from another core network device, or the AF may determine the mask information based on the service requirement. This is not specifically limited in this embodiment of this application.

It should be noted that the second mask in this embodiment of this application may be an application layer identifier, or may be a non-application layer identifier, for example, information stored by the UE.

In an example, the mask information may be the identification information, that is, the first mask is an identifier indicated by the identification information. In this case, the mask information may indicate that the identifier of the to-be-paged UE needs to match the identifier indicated by the identification information.

Optionally, the signaling 1 further indicates action information. The action information indicates to change the state of the first flag of the to-be-paged UE.

For example, the action information may indicate to change (or adjust, reverse, or alter) a state of a first flag of a UE to the first state.

For another example, the action information may be understood as indicating to change a state of a first flag of a UE that meets a second condition and/or a state of a first flag of a UE that does not meet the second condition. The second condition is, for example, that the first mask indicated by the mask information is the same as the second mask stored in the UE. The second condition may be preconfigured in the UE. The UE that meets the second condition and/or the UE that does not meet the second condition may be some or all of the to-be-paged UEs.

For example, the action information may indicate to change the state of the first flag of the UE that meets the second condition to the first state, and/or change the state of the first flag of the UE that does not meet the second condition to the second state. The first state and the second state may be different. For example, the first state is A, and the second state is B. If a second mask in one UE matches the first mask indicated by the mask information, the UE changes a state of a flag of the UE to A. If a second mask in one UE does not match the first mask indicated by the mask information, the UE changes a state of a flag of the UE to B.

Alternatively, the action information may indicate to change the state of the first flag of the UE that does not meet the second condition to the first state, and/or change the state of the first flag of the UE that does not meet the second condition to the second state.

It should be noted that, if the state of the first flag of the UE is already a state obtained through change indicated by the action information, after receiving the action information, the UE may not need to perform an action of changing the state of the first flag.

For another example, the second condition is, for example, that an identifier of the UE meets the identifier indicated by the identification information. This example is applicable to a case in which the mask information is equivalent to the foregoing identification information. In this case, it is equivalent to that the first device selects the UE that meets the second condition for access.

In an example, the action information may further indicate to change a state of another flag. The another flag is a flag other than the first flag in the at least one flag maintained by the UE. This is not limited in this embodiment of this application.

S402: The AMF sends signaling 2 to the first device. Correspondingly, the first device receives the signaling 2 from the AMF. The signaling 2 is for paging a UE. The signaling 2 in this embodiment of this application may also be referred to as first signaling.

When the first device is an access network device, the first device may directly receive the signaling 2 from a first core network device (for example, the AMF). When the first device is not an access network device (for example, a terminal device), the first device may receive the signaling 2 from a first core network device through an access network device.

For a meaning of the signaling 2, refer to the foregoing content of the signaling 1. Details are not described herein.

In an example, the signaling 2 may indicate the information about the first flag of the to-be-paged UE, to achieve an objective of paging a UE. Alternatively, the signaling 2 may be for paging a UE, and may further indicate the information about the first flag of the to-be-paged UE.

The signaling 2 may explicitly indicate the information about the first flag of the to-be-paged UE. For example, the signaling 2 includes the information about the first flag. Alternatively, the signaling 2 may implicitly indicate the information about the first flag of the to-be-paged UE.

For content of the information about the first flag of the to-be-paged UE, refer to the foregoing content described in S401. The information about the first flag of the to-be-paged UE may be determined by the AMF. For a manner in which the AMF determines the information about the flag, refer to the foregoing content in which the AF determines the information about the flag. Alternatively, the information about the first flag of the to-be-paged UE may be determined by the AMF based on the signaling 1.

In an example, the signaling 2 may be non-access stratum (non-access stratum, NAS) signaling, and the NAS signaling may also be referred to as a NAS message. In this way, after receiving the signaling 2, the first device does not need to sense content in the signaling 2. This helps improve security of information included in the signaling 2, and reduce a processing amount of the first device.

Optionally, the signaling 2 may further indicate quantity-of-times information. For a meaning of the quantity-of-times information, refer to the foregoing content. A quantity of times indicated by the quantity-of-times information may be determined by the AMF, or may be determined by the AMF based on the signaling 1.

When the quantity of times indicated by the quantity-of-times information is more than one, it is equivalent to that the signaling 2 indicates the first device to initiate a plurality of times of paging to the UE. After the first device receives the signaling 2, the first device may initiate, based on the signaling 2, a plurality of times of paging. In other words, in one round of paging (for example, a current round of paging), the first device may trigger a plurality of times of access. For the UE, if one UE fails to access the first device in a 1^{st} time of paging, the UE may continue to attempt to access the first device in a next time of paging. However, a terminal device that successfully accesses the first device in the 1^{st} time of paging may not need to access the first device again in the next time of paging. In one round of paging, the to-be-paged UE may successfully access the first device once. However, in one round of paging, the UE may successfully access the first device after a plurality of rounds of access triggered by the first device.

One round of paging may be understood as at least one time of paging performed by the first device on the UE under an indication of the signaling 1, or may be understood as paging performed by the first device in one paging cycle, where the paging cycle may be indicated by the AF via the signaling 1. Duration of the paging cycle may be an interval between two times of sending, by the AF, of signaling for paging a UE.

When the quantity of times indicated by the quantity-of-times information is one, or when the signaling 2 does not indicate the quantity-of-times information, after the first device receives the signaling 2, the first device may initiate one time of paging (or access, inventory, or inventory) based on the signaling 2.

Optionally, the signaling 2 further indicates identification information of the to-be-paged UE. For a meaning of the identification information, refer to the foregoing descriptions.

Optionally, the signaling 2 further indicates mask information. For a meaning of the mask information, refer to the foregoing content in S401. The mask information may be determined by the AMF, or may be determined by the AMF based on the signaling 1.

In an example, the mask information may be the foregoing identification information. For a meaning of the identification information, refer to the foregoing descriptions.

Optionally, the signaling 2 further indicates action information. For a meaning of the action information, refer to the foregoing descriptions. For a manner in which the AMF obtains the action information, refer to the content in which the AMF obtains the mask information. Details are not described herein again.

In another possible implementation, the first core network device may be the SMF. In this case, the AMF in S401 and S402 may be replaced with the SMF.

In an example, the first device may directly page a UE without being triggered by a core network device (for example, the AMF or the AF). In this case, there is no need to perform step S401 and step S402, that is, step S401 and step S402 are optional steps.

S403: The first device sends signaling 3. Correspondingly, one or more UEs receive the signaling 3 from the first device. The signaling 3 indicates the information about the first flag of the to-be-paged UE. For a meaning of the information about the first flag, refer to the foregoing content described in S401. The signaling 3 in this embodiment of this application may also be referred to as second signaling. In the embodiment shown in FIG. 4, that a first UE receives the signaling 3 is used as an example.

Paging may be understood as triggering the terminal device to access the first device, or triggering the terminal device to establish a connection to the first device, or triggering the terminal device to exchange data with the first device.

The signaling 3 is, for example, paging (paging) signaling sent by the first device, and the signaling 3 is, for example, similar to paging in the cellular network. The signaling 3 is for paging one or more UEs; the signaling 3 is for selecting one or more UEs; the signaling 3 is for indicating (or triggering) one or more UEs to send uplink data; the signaling 3 is for indicating (or triggering) one or more UEs to establish a connection to a network (for example, an access network device); the signaling 3 is for indicating one or more UEs to perform access; or the signaling 3 is for indicating (or triggering) one or more UEs to initiate random access or the like. In this embodiment of this application, that the signaling 3 is for paging one or more UEs is used as an example. The one or more UEs may be considered as to-be-paged UEs.

It should be noted that the to-be-paged UE in this embodiment of this application may be understood as that the UE is in a non-connected state, that is, the UE has no communication connection to the first device, or may be understood as that a state of a flag of the to-be-paged UE is a reset state or an initial state. A paged UE in this embodiment of this application may be understood as that the UE enters a state of communicating with the first device.

It should be noted that, in one round of paging indicated by the signaling 2, the first device may initiate one or more times of paging. When the signaling 2 indicates the first device to initiate a plurality of times of paging, for ease of differentiation, in this embodiment of this application, this time of paging initiated via the signaling 3 is considered as a current time of paging (which may also be referred to as an M^{th} time of paging). In other words, a current time of paging mentioned below may be understood as paging initiated via the signaling 3. In this case, the information that is of the first flag and that is indicated by the signaling 3 may be used as information that needs to be met by a flag of a UE in one time of paging (or selection or determining) in the current round of paging, or may be used as information that needs to be met by a flag of a UE in each time of paging in the current round of paging.

In an example, if the signaling 2 is NAS signaling, the first device directly sends the NAS signaling without sensing information about the flag of the to-be-paged UE. In this case, both the signaling 2 and the signaling 3 are the NAS signaling.

In another example, the first device determines the information about the first flag of the to-be-paged UE, and generates the signaling 3.

Manner 1: The first device determines the first type and/or the first state based on the signaling 2.

When the signaling 2 indicates the information about the first flag of the to-be-paged UE, the first device may use the type that is of the first flag of the to-be-paged UE and that is indicated by the signaling 2 as the first type, and/or the first device may use the state that is of the first flag of the to-be-paged UE and that is indicated by the signaling 2 as the first state.

In Manner 1, because the first device does not need to determine the information about the first flag, the processing amount of the first device is reduced.

Manner 2: The first device may determine the first type and/or the first state.

The following describes an example of the manner in which the first device determines the first type and/or the first state.

In a manner (referred to as a sub-manner A1) of determining the first type, the first device may randomly determine a type from the plurality of types of flags as the first type. The plurality of types of flags may be preconfigured in the first device, for example, configured in the first device by using a protocol.

In a manner (referred to as a sub-manner A2) of determining the first type, the first type may be a default value specified in a protocol.

In a manner (referred to as a sub-manner A3) of determining the first type, the first device may determine the first type based on a collision status in a previous round of paging (or an (N-1)^{th} round of paging) performed by the first device. A collision may be understood as that two or more UEs send uplink data to the first device in a same time unit.

In a first case, before performing the current round of paging, the first device may further initiate a round of paging (which may also be referred to as an (N-1)^{th} round of paging, or may also be referred to as a previous round of paging). In this embodiment of this application, the first device may determine, based on a quantity of collisions detected by the first device in the previous round of paging and a quantity of idle access opportunities, a quantity of UEs that have not accessed the first device, or determine the type of the flag of the to-be-paged UE based on a quantity (referred to as a second quantity) of UEs that have successfully accessed the first device in the previous round of paging. Descriptions are provided below by using an example in which the type of the flag of the to-be-paged UE is determined based on the second quantity.

For example, if the second quantity is greater than or equal to a second threshold, it indicates that the quantity of UEs that successfully access the first device in the previous round of paging is large. If duration for keeping the state corresponding to the selected flag is short, a collision between UEs is more likely to occur. Based on this, in this embodiment of this application, the first device determines that the type of the flag of the to-be-paged UE is a type different from that in the previous round of paging. For example, if a type of a second flag of a UE paged in the previous round is a second type, the first device determines that the type of the first flag of the to-be-paged UE is the first type. Duration for keeping the state of the first flag that is of the first type is longer than duration for keeping the state of the second flag that is of the second type. If the second quantity is less than a second threshold, it indicates that a quantity of UEs previously paged is appropriate. In this case, the first device determines that the type of the first flag of the to-be-paged UE is the same as a type in the previous round of paging, or it may be understood that the first device does not change, in this time of paging in the current round of paging, the type of the flag of the to-be-paged UE in the previous round of paging.

In a manner (referred to as a sub-manner B1) of determining the first state, the first device may randomly determine a state from the plurality of states of the flags as the first state. The plurality of states of the flags may be preconfigured in the first device, for example, configured in the first device by using a protocol.

In a manner (referred to as a sub-manner B2) of determining the first state, the first device determines the initial state of the first flag as the first state. For a meaning of the initial state, refer to the foregoing descriptions.

In a manner (referred to as a sub-manner B3) of determining the first state, the first device may determine the state of the first flag of the to-be-paged UE based on the second quantity. For a meaning of the second quantity, refer to the foregoing descriptions.

For example, if the second quantity is greater than or equal to the second threshold, the first device determines that the state of the first flag of the to-be-paged UE is adjusted to a state different from that in the previous round of paging. If the second quantity is less than the second threshold, the first device determines that the state of the first flag of the to-be-paged UE is the same as the state in the previous round of paging.

In a manner (referred to as a sub-manner B4) of determining the first state, the first state may be preconfigured in the first device, for example, preconfigured in the first device by using a protocol.

It should be noted that the first device may determine the first type by using any one of the sub-manner A1 and the sub-manner A3, and may determine the first state by using any one of the sub-manner B1 to the sub-manner B4.

Manner 2 is applicable to a case in which the signaling 2 does not indicate the information about the first flag of the to-be-paged UE. In Manner 2, the first device may flexibly determine the information about the first flag. In addition, the first device may further flexibly adjust the information about the first flag of the to-be-paged UE based on information about a flag used in the previous round of paging.

Manner 3: The first device may determine the information about the first flag of the to-be-paged UE with reference to Manner 1 and Manner 2.

For example, the signaling 2 indicates the first type, and the first device determines the first type based on the signaling 2; and the first device determines the first state. Alternatively, the signaling 2 indicates the first state, and the first device determines the first state based on the signaling 2; and the first device determines the first type.

Optionally, the first state indicated by the signaling 3 may be understood as indicating to set a state of a first flag of a UE, and may further indicate to select a UE whose set state meets the first state to access the first device. Setting of the state of the flag of the UE is, for example, to set the state of the flag of the UE that meets the second condition to the first state, and set the state of the first flag of the UE that does not meet the second condition to the second state.

Optionally, the signaling 3 further indicates mask information. For a meaning of the mask information, refer to the foregoing content. The mask information may be determined by the first device, or may be determined based on the signaling 2.

Optionally, the signaling 3 further indicates action information. For a meaning of the action information, refer to the foregoing content in S401. For a manner in which the first device obtains the action information, refer to the content in which the first device determines the mask information.

For example, the signaling 3 is select (select) signaling. A first field in the signaling 3 indicates the first type and/or the first state. The first field is, for example, a target (target) field in the select signaling. For example, if a value of the target field is 000, the first type is the session S0. For another example, the signaling 3 is select signaling and query (query) signaling, a first field is, for example, a session (session) field and a target (target) field in the query signaling, the session field indicates the first type, and the target field indicates the first state. For example, if a value of the session field is 00, it indicates that the first type is the session S0; and if a value of the target field is 0, it indicates that the state of the session S0 is A.

In a possible implementation, in one time of paging, the first device may page a UE via one piece of signaling. For example, the first device may page a UE via the signaling 3. Alternatively, in one time of paging, the first device may page a UE via two pieces of signaling. When the UE is paged via two pieces of signaling, the two pieces of signaling may be sequentially classified as first-level paging signaling and second-level paging signaling. Information indicated by the second-level paging signaling may be the same as or different from information indicated by the first-level paging signaling. The second-level paging signaling may be related to the first-level paging signaling. For example, the second-level paging signaling performs supplementary indication on content indicated by the first-level paging signaling. For example, the first-level paging signaling indicates the type of the first flag, and the second-level paging signaling indicates the state of the first flag. For another example, a first-level paging instruction instructs the action information, and a second-level paging instruction instructs the first state of the first flag, which is equivalent to that the first-level paging instruction performs selection indication for a state selected via the second-level paging instruction. For example, the second-level paging signaling adjusts content indicated by the first-level paging signaling. For example, the first-level paging signaling indicates the second state of the first flag, and the second-level paging signaling indicates the first state of the first flag.

In a possible implementation, when the signaling 2 indicates a plurality of times of paging in one round of paging, the first device flexibly completes one time of paging based on one or two pieces of signaling. For example, the first device may page the UE via two pieces of signaling in a 1^{st} time of paging, and the first device pages the UE via one piece of signaling in a 2^{nd} time of paging. Because the first device does not need to page the UE via the two pieces of signaling in each time of paging, signaling overheads of the first device are reduced.

In an example, after receiving the signaling 3, the first UE may directly determine whether to access the first device. In this case, it is equivalent to that the first device pages the UE via only the signaling 3, that is, the signaling 3 separately triggers one time of paging in the current round of paging. In this case, this time of paging triggered via the signaling 3 may be considered as the current time of paging or considered as the M^{th} time of paging. When the UE is a tag and the first device is a reader/writer, one piece of signaling 3 is equivalent to implementing functions of two pieces of signaling: the select signaling and the query signaling. This helps reduce the signaling overheads of the first device.

Content indicated by the signaling 3 is different, and specific content in which the first UE determines, based on the content indicated by the signaling 3, whether to access the first device is also different. The following separately describes the content.

Example 1: The signaling 3 indicates the first type.

If a type of the first UE is the first type, the first UE determines to access the first device this time. If a type of the first UE is not the first type, the first UE determines not to access the first device this time.

Example 1 is applicable to a case in which a flag of one UE is of only one type, and types of two UEs are different. In this case, the first device may determine the to-be-paged UE based only on the first type.

Example 2: The signaling 3 indicates the first state.

If a type of the first UE is the first state, the first UE determines to access the first device this time. If a type of the first UE is not the first state, the first UE determines not to access the first device this time.

Example 2 is applicable to a case in which flags of no UEs have different types, or types of flags of any two UEs are the same.

Example 3: The signaling 3 indicates the action information and the first state.

The first UE correspondingly changes the state of the first UE based on whether the second UE meets the second condition. For example, if the first UE meets the second condition, the state of the first UE is adjusted to A. If the first UE does not meet the second condition, the state tag of the first UE is adjusted to B.

If the adjusted state of the first UE is the first state, the first UE determines to access the first device this time. If the adjusted state of the first UE is not the first state, the first UE determines not to access the first device this time.

Example 3 is applicable to a case in which flags of no UEs have different types, or types of flags of any two UEs are the same.

Example 4: The signaling 3 indicates the first type and the first state.

If the first UE determines that a type of a flag of the first UE includes the first type, and the state of the flag corresponding to the first type is the first state, the first UE determines to access the first device this time. If the type of the first UE does not include the first type, and/or the state of the flag corresponding to the first type of the first UE is not the first state, the first UE determines not to access the first device this time.

Example 5: The signaling 3 indicates the first type and the action information.

The first UE changes, based on whether the second condition is met, the state corresponding to the first type.

If the first UE meets the second condition, the first UE determines to access the first device this time. If the type of the first UE does not include the first type, and/or the first UE does not meet the second condition, the first UE determines not to access the first device this time.

Example 6: The signaling 3 indicates the first type, the first state, and the action information.

The first UE adjusts, based on whether the second condition is met, the state corresponding to the first type. If the adjusted state corresponding to the first type of the first UE is the first state, the first UE determines to access the first device this time. If determining that the adjusted state corresponding to the first type of the first UE is not the first state, the first UE determines not to access the first device this time. In this case, the first state indicates that a UE meets a second condition, and a state of a flag of the UE is a state of a flag after the corresponding action information is executed.

In Example 1 to Example 6, the signaling 3 is equivalent to directly indicating information about a flag that needs to be meet by the to-be-paged UE. When the quantity of times indicated by the quantity-of-times information is one, the signaling 3 is equivalent to indicating one time of paging, and is also equivalent to indicating one time of access. When the quantity of times indicated by the quantity-of-times information is more than one, the signaling 3 is equivalent to indicating one time of paging in one round of paging.

In another example, S404 may be further performed, that is, the first device sends signaling 4 to the first UE. Correspondingly, the first UE receives the signaling 4 from the first device. The signaling 4 in this embodiment of this application may also be referred to as fourth signaling. It should be noted that S404 and S403 may be performed in any sequence. For example, S403 is performed before S404; or S404 is performed before S403.

For example, the signaling 3 indicates only one or two of the first type, the first state, and the action information in the foregoing examples, and the signaling 4 indicates information, in the first type, the first state, and the action information, other than information indicated by the signaling 3.

The signaling 4 indicates the first state, that is, it is equivalent to indicating that the UE whose current state of the first flag is the first state accesses the first device this time. In this case, the first UE may determine, based on the signaling 3 and the signaling 4, whether to access the first device this time. In this case, it is equivalent to that the first device pages the UE via the signaling 3 and the signaling 4, that is, the signaling 3 and the signaling 4 jointly trigger one time of paging in the current round of paging. In this case, the signaling 3 may be considered as first-level paging signaling, and the signaling 4 may be considered as second-level paging signaling. For example, if the UE is a tag, and the first device is a reader/writer, the signaling 3 may be select signaling, and the signaling 4 may be query signaling. In this case, this time of paging jointly indicated by the signaling 3 and the signaling 4 is considered as the current time of paging (also referred to as the M^{th} time of paging).

If content indicated by the signaling 3 is different from content indicated by the signaling 4, content in which the first UE determines whether to access the first device this time is also different. The following separately describes the content.

Example 7: The signaling 3 indicates the action information, and the signaling 4 indicates the first state.

The first state indicated by the signaling 4 may be understood as a state in which a flag of a UE that is to access the first device is determined. For a manner in which the first UE determines whether to access the first device this time, refer to the foregoing content described in Example 3.

Example 8: The signaling 4 indicates the first state, and the signaling 4 indicates the action information.

For a manner in which the first UE determines whether to access the first device this time, refer to the foregoing content described in Example 3.

Example 9: The signaling 3 indicates the first type, and the signaling 4 indicates the action information.

For content in which the first UE determines whether to access the first device this time, refer to the foregoing content described in Example 5.

Example 10: The signaling 3 indicates the first type, and the signaling 4 indicates the first state.

For a manner in which the first UE determines whether to access the first device this time, refer to the foregoing content described in Example 4.

Example 11: The signaling 3 indicates the first type and the action information, and the signaling 4 indicates the first state.

For a manner in which the first UE determines whether to access the first device this time, refer to the foregoing content described in Example 6.

In Example 7 to Example 11, the signaling 3 and the signaling 4 jointly indicate that the UE that performs access this time completes one time of paging.

In an example, when the signaling 3 indicates the mask information, after determining that the first UE meets the second condition, the first UE may determine, based on the information about the first flag, whether to access the first device.

In an example, when the first device does not need to change the state of the flag of the UE, the first device does not need to indicate the action information. In other words, in this case, neither the signaling 3 nor the signaling 4 needs to indicate the action information.

S405: The first device sends signaling 5 to the first UE. Correspondingly, the first UE receives the signaling 5 from the first device. The signaling 5 in this embodiment of this application may also be referred to as fifth signaling.

The signaling 5 may indicate to determine that the first UE accesses the first device. For example, the signaling 5 indicates a maximum time unit range of the first UE, to determine that the first UE accesses the first device. The maximum time unit range may be understood as a maximum range of a time unit, and the first UE may select the time unit from the maximum time unit range. The time unit may be understood as a time domain resource.

For example, the time unit is a radio frame (radio frame), a subframe (subframe), a slot (slot), a mini slot (mini slot), orthogonal frequency division multiplexing (orthogonal frequency division multiplexing, OFDM), or the like. Alternatively, the time unit in this embodiment of this application may not be an interval having a fixed time length, but a sending opportunity (or referred to as an access opportunity) in time domain. Duration of different sending opportunities may be the same or different.

In an example, the signaling 5 may be the signaling 3 or the signaling 4. When the signaling 5 is equivalent to the signaling 3, it is equivalent to that the signaling 3 further indicates the maximum time unit range. When the signaling 5 is equivalent to the signaling 4, it is equivalent to that the signaling 4 further indicates the maximum time unit range.

In an example, the signaling 3 or the signaling 4 may indicate the maximum time unit range of the first UE. In this case, there is no need to perform S405, that is, S405 is an optional step.

Optionally, the signaling 3 further indicates identification information of the to-be-paged UE. For a meaning of the identification information, refer to the foregoing descriptions.

Alternatively, the mask information is equivalent to the identification information indicated by the signaling 3. In this case, the first device selects a UE that meets the identification information for access.

S406: The first UE sends a first request to the first device. Correspondingly, the first device receives the first request from the first UE.

When the first UE determines to access the first device, the first UE may send the first request to the first device. The first request is for requesting to access the first device. The first request in this embodiment of this application is, for example, a third message (Msg3) in a random access process. For example, the first request may alternatively be a random number or a random access request message.

It should be noted that S405 and S406 are a case that may be performed by the UE. For example, if the first UE determines not to access the first device, the first UE does not perform steps S405 and S406, that is, S405 and S406 are optional steps.

In an example, the first UE may send uplink data to the first device.

In an example, after the first UE successfully accesses the first device, the first UE may change the first state of the first flag. In this way, the first UE can be prevented from being identified (or read or written) by the first device for a plurality of times in one round of paging (or inventory, inventory, or access).

The first device pages a UE based on information about a flag of the UE. When the first device successfully receives uplink data from the UE, it is considered that the first device identifies the UE once. For example, the first device is a reader/writer, the UE is a tag, and if the reader/writer successfully receives, from the tag, an electronic product code (electronic product code, EPC) of the tag, it is considered that the reader/writer identifies the tag once.

In an example, when the signaling 2 indicates that the UE is paged for a plurality of times, after determining that the first UE accesses the first device, the first device may further send signaling for re-initiating paging of the UE, to perform a next time of paging (or referred to as an (M+1)^{th} time of paging). For the next time of paging, refer to the current time of paging. Details are not described herein again. In this case, the signaling that is for re-initiating paging of the UE and that is sent by the first device may be one piece of second-level paging signaling. In this way, the first device does not need to send the first-level paging signaling (that is, the second signaling) again, and this helps reduce the signaling overheads of the first device.

In another example, after sending the signaling 2 to the first device at a first moment (which may also be referred to as a moment T1), the AMF may send signaling 6 to a second device at a second moment (which may also be referred to as a moment T2). The signaling 6 in this embodiment of this application may also be referred to as sixth signaling. Content of the signaling 2 and content of the signaling 6 may be the same. For a manner in which the AMF may send the signaling 6 to the second device, refer to the content in which the AMF sends the signaling 2 to the first device. This example is applicable to a case in which the signaling 2 indicates the information about the first flag and/or the action information. The first device and the second device are devices of a same type. For example, when both the first device and the second device are access network devices, the first device and the second device may be two neighboring access network devices. For another example, when both the first device and the second device are terminal devices or access nodes, an access network device serving the first device may be the same as or neighboring to an access network device serving the second device. For another example, both the first device and the second device are two neighboring cells of a same access network device. For another example, the first device may be replaced with a first cell, and the second device may be replaced with a second cell.

For example, the signaling 6 may indicate information about the second flag of the to-be-paged UE. The information about the second flag may be determined based on the information about the first flag indicated by the signaling 2. For example, the information about the second flag indicates that a type of the second flag is the second type and/or a state of the second flag is the second state. For example, the information about the second flag indicates a UE of the second type to access the second device. For another example, the information about the second flag indicates a UE in the second state to access the second device. For another example, the information about the second flag indicates a UE that is of the second type and that is in the second state to access the second device.

For example, the second flag may be the same as or different from the foregoing first flag. The second type may also be the same as or different from the first type of the first flag. The second state may also be the same as or different from the first state of the first flag. For example, the second state may be an initial state of the second flag.

For example, the state of the second flag indicated by the signaling 6 may be the first state. Because the state of the first flag of the UE that has successfully accessed the first device may be reversed to the second state, in this case, the second device selects the UE whose first flag is in the first state for access, so that a case in which the first device and the second device repeatedly identify a UE in a communication overlapping range can be reduced. The communication overlapping range is an area in which communication coverage of the first device and communication coverage of the second device overlap. In addition, the AMF indicates the signaling 6 to the second device at the moment T2. This can avoid a case in which the UE that has successfully accessed the first device is repeatedly identified by the second device because the state of the first flag of the UE is restored to the first state.

In an example, an absolute value of a time difference between a third moment (that is, a moment T3) and the second moment (that is, the moment T2) is less than duration for keeping a state obtained by reversing the state of the flag corresponding to the first type, and/or an absolute value of a time difference between a third moment (that is, a moment T3) and the second moment (that is, the moment T2) is less than duration for keeping a state obtained by reversing the first state. In this case, when the AMF indicates the second device to page the UE, the type and/or state of the flag of the to-be-paged UE may be directly indicated without indicating the action information. In this case, the type of the second flag may be the first type and/or the state of the second flag is the first state, that is, the information about the second flag is the same as the information about the first flag, so that a UE that meets the types and/or states of the flags accesses the second device. A state obtained by reversing the first state may be the second state.

The third moment (that is, the moment T3) is a moment at which the AMF determines that the first device completes a current round of paging.

For example, the AMF determines a moment at which first indication information from the first device or the access network device is received as the third moment. The first indication information indicates the first device to complete the current round of paging.

For example, after the first device completes the current round of paging, the first device may send the first indication information to the AMF, and the AMF determines the moment at which the first indication information is received as the third moment.

For another example, when indicating the first device to perform the current round of paging, the AMF indicates, via the signaling 2, an end moment at which the current round of paging is completed. In this case, the AMF may directly use the end moment of the current round of paging as the third moment.

Optionally, an absolute value of a time difference between the first moment (that is, the moment T1) and the second moment (that is, the moment T2) is less than the duration for keeping the state obtained by reversing the state of the flag corresponding to the first type, and/or an absolute value of a time difference between the first moment (that is, the moment T1) and the second moment (that is, the moment T2) is less than the duration for keeping the state obtained by reversing the first state.

In the embodiment shown in FIG. 4, the first device may indicate the information about the first flag of the to-be-paged UE, and does not need to specifically determine a specific to-be-paged UE. The first device may page a UE based on information about a flag of the UE. This provides a mechanism for paging a UE. A process of paging a UE is implemented without specifically determining a to-be-paged UE. This helps simplify a manner in which the first device pages a UE. In addition, because the first device may page one or more UEs by indicating information about first flags of to-be-paged UEs without specifically indicating which UE is to be paged, a data amount of paging signaling (that is, the signaling 3) sent by the first device can be reduced. This helps reduce paging overheads. In addition, the signaling 2 may further indicate the quantity-of-times information, so that the first device may initiate, based on one piece of signaling 2, a plurality of times of paging. This helps reduce a quantity of times of interaction between the first device and the first core network device. In addition, in one time of paging, the first device does not need to page a UE via two pieces of signaling. This helps improve flexibility of paging by the first device, and reduce the signaling overheads of the first device. In addition, the first core network device may further determine, based on the indicated information about the first flag of the first device, information indicating the second flag of the second device. This can reduce a case in which the first device and the second device repeatedly identify a same UE.

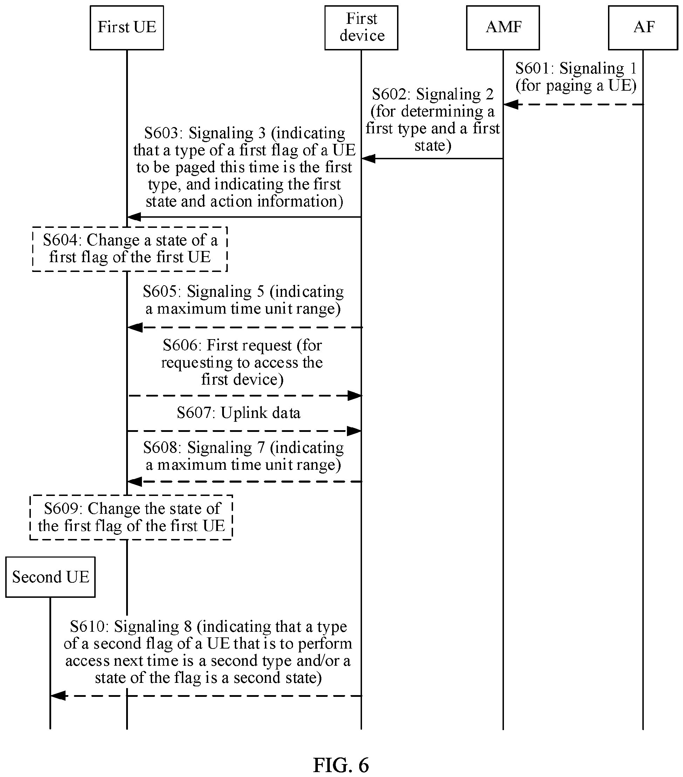

FIG. 6 is a schematic flowchart of a paging method according to an embodiment of this application. FIG. 6 is described by using an example, in the embodiment shown in FIG. 4, in which the signaling 2 indicates the first type and the first state, an example, in the embodiment shown in FIG. 4, in which the first device determines the first type and the first state based on the signaling 2 (that is, determines the first type and the first state in Manner 1), and an example, in the embodiment shown in FIG. 4, in which the signaling 3 includes the first type, the first state, and the action information.

S601: An AF sends signaling 1 to an AMF. Correspondingly, the AMF receives the signaling 1 from the AF. The signaling 1 is for paging a UE. For a meaning of the signaling 1, refer to the foregoing content.

In another possible implementation, an SMF may send the signaling 1 to the AMF.

In an example, the AMF may directly page a UE without being triggered by another core network device (for example, the AF). In this case, there is no need to perform S601, that is, S601 is an optional step.

S602: The AMF sends signaling 2 to a first device. Correspondingly, the first device receives the signaling 2 from the AMF. For a meaning of the signaling 2, refer to the foregoing content.

For a manner in which the AMF sends the signaling 2 to the first device, refer to the foregoing descriptions. Details are not described herein again.

In the embodiment shown in FIG. 6, for example, the first device determines a first type and/or a first state based on the signaling 2. In other words, for example, the signaling 2 implicitly indicates the first type and the first state.

For example, the signaling 2 includes at least one of the following information (1) to (5).
(1) Frequency information. The frequency information indicates a frequency at which the first device performs paging. It may be further understood that the frequency information indicates a frequency at which the first device performs paging in a current round of paging, and may be understood as a frequency at which the first device initiates paging under an indication of the signaling 2. For example, the frequency information indicates that the first device initiates two times of paging per minute (min).
(2) Quantity-of-times information. For a meaning of the quantity-of-times information, refer to the foregoing content. For example, the quantity-of-times information indicates that the first device initiates paging to a UE for five times.
(3) Accuracy information. The accuracy information indicates accuracy of accessing the first device, and the accuracy may also be referred to as a success rate. The accuracy may be represented by using a ratio of a quantity of UEs that successfully page the first device to a quantity of UEs that are paged by the first device. The quantity of UEs that are paged by the first device may be understood as a quantity of UEs to which the first device initiates paging.
(4) Quantity information. The quantity information indicates an order of magnitude of a UE that expects to page the first device. The order of magnitude may be understood as a scale or a level of a quantity of UEs that expect to page the first device, for example, a thousand level or a hundred level.
(5) Paging time information. The paging time information indicates start time and/or end time at which the first device performs paging.

When the signaling 2 indicates the first device to perform paging for a plurality of times, the start time of paging may be understood as start time at which the first device performs a 1^{st} time of paging under the indication of the signaling 2. For example, time at which the first device receives the signaling 2 is used as the start time of paging. The end time of paging may be understood as a moment at which the first device performs paging for the last time under the indication of the signaling 2, for example, a moment at which the first device sends paging signaling (for example, signaling 3 or signaling 4) to the UE for the last time under the indication of the signaling 2. For a meaning of the signaling 3 and the signaling 4, refer to the foregoing descriptions.

Alternatively, when the signaling 2 indicates the first device to perform paging only once, the start time of paging may be understood as time at which the first device starts a current time of paging under the indication of the signaling 2.

In an example, the signaling 2 may indicate at least one of the information (1) to (5), to page a UE. Alternatively, the signaling 2 may be separately used to page a UE, and further indicate at least one of the information (1) to (5). This is not limited in this embodiment of this application.

It should be noted that the information (1) to (5) may be determined by the AMF based on a service requirement, or may be obtained by the AMF from another core network device (for example, the AF). This is not limited in this embodiment of this application.

In an example, the signaling 2 may also include mask information. For a meaning of the mask information, refer to the foregoing content.

The AMF may determine the mask information based on the service requirement, or obtain the mask information based on the signaling 2.

In another possible implementation, a first core network device may be the SMF. In this case, the AMF in S601 and S602 may be replaced with the SMF.

S603: The first device sends signaling 3. Correspondingly, one or more UEs receive the signaling 3 from the first device.

In this embodiment of this application, an example in which a first UE receives the signaling 3 is used, and an example in which the signaling 3 includes the first type and the first state is used.

In this embodiment of this application, descriptions are provided by using an example in which the first device determines, based on information indicated by the signaling 3 (that is, in Manner 1 used by the first device), that a type of a flag of a to-be-paged UE is the first type and/or a state of the flag is the first state.

For example, the first device determines, based on the signaling 3, a requirement on a state change condition of the state of the flag of the to-be-paged UE (for example, a requirement on duration in which the state needs to be kept). When a same state corresponds to different types of flags, duration for keeping the state under a first condition is different, and/or duration for keeping at least two states in a plurality of states under a first condition is different. Therefore, the first device may determine that a type of a flag corresponding to a state that matches the requirement on duration is the first type, and/or the first device determines that a state that is of a flag and that matches the requirement on duration is the first state.

The following describes a manner in which the first device determines the first type and/or the first state based on different information indicated by the signaling 2.
1. The signaling 2 indicates the information (1), namely, the frequency information.
   A larger frequency indicated by the frequency information indicates a shorter interval between two times of performing paging by the first device. In this case, the first device may determine that a state kept for short duration is the first state, and/or a type corresponding to a state kept for short duration is the first type. A smaller frequency indicated by the frequency information indicates a longer interval between two times of performing paging by the first device. In this case, the first device determines that a state kept for long duration is the first state, and/or a type corresponding to a state kept for long duration is the first type.
2. The signaling 2 indicates the information (2), namely, the quantity-of-times information.
   A larger quantity of times indicated by the quantity-of-times information indicates that the first device performs paging more frequently in a period of time. In this case, the first device determines that a state kept for short duration is the first state, and/or a type corresponding to a state kept for short duration is the first type. A smaller quantity of times indicated by the quantity-of-times information indicates that the first device performs paging less frequently. In this case, the first device determines that a state kept for long duration is the first state, and/or a type corresponding to a state kept for long duration is the first type.
3. The signaling 2 indicates the information (3), namely, the accuracy information.
   Higher accuracy indicated by the accuracy information indicates that a possibility that the UE successfully accesses the first device needs to be increased, where a larger quantity of times that the first device performs paging indicates that the possibility that the UE successfully accesses the first device can be increased even more. In this case, the first device determines that a state kept for short duration is the first state, and/or a type corresponding to a state kept for short duration is the first type. Lower accuracy indicated by the accuracy information indicates that a probability that the UE successfully accesses the first device does not need to be excessively high. Therefore, a quantity of times that the first device performs paging may be small. In this case, the first device determines that a state kept for long duration is the first state, and/or a type corresponding to a state kept for long duration is the first type.
4. The signaling 2 indicates the information (4), namely, the quantity information.
   A higher order of magnitude indicated by the quantity information indicates a larger quantity of UEs that need to be paged by the first device, and indicates a larger processing amount of performing paging by the first device once. However, if a UE frequently switches a state of a flag, the processing amount of the first device is undoubtedly caused to be excessively large. In this case, the first device may determine that a state kept for long duration is the first state, and/or a type corresponding to a state kept for long duration is the first type. A lower order of magnitude indicated by the quantity information indicates a smaller quantity of UEs that are to access the first device, and the processing amount of performing paging by the first device once is smaller. In this case, the first device may determine that a state kept for long duration is the first state, and/or a type corresponding to a state kept for long duration is the first type.
5. The signaling 2 indicates the information (5), namely, the access time information.

If the paging time information indicates the start time, the first device may determine duration for each time of paging based on current time and a quantity of times of paging that have been performed after the start time. Alternatively, if the paging time information indicates the end time, the first device may determine duration for each time of paging based on current time and a quantity of times of paging that have been performed after the start time. Alternatively, if the paging time information indicates the start time and the end time, the first device may determine duration for each time of paging.

If the duration for each time of paging is short, the first device may determine that a state kept for short duration is the first state, and/or a type corresponding to a state kept for short duration is the first type. If the duration for each time of paging is long, the first device may determine that a state kept for long duration is the first state, and/or a type corresponding to a state kept for long duration is the first type.

In a possible implementation, if the signaling 2 indicates two or more pieces of information in the foregoing information (1) to (5), the first device may determine, with reference to the two or more pieces of information, the state corresponding to the type of the flag of the to-be-paged UE or the requirement on the state change condition of the state of the flag, to further determine that a type corresponding to the requirement on the state change condition is the first type of the flag and/or a state matching the requirement on the state change condition is the state of the flag.

For example, the first state may be an initial state. For a meaning of the initial state, refer to the foregoing descriptions.

Optionally, the signaling 3 may further indicate mask information. For a meaning of the mask information and a manner in which the first device obtains the mask information, refer to the foregoing descriptions.

In an example, the signaling 3 may further indicate action information. For a meaning of the action information and a manner in which the first device obtains the action information, refer to the foregoing descriptions. In the embodiment shown in FIG. 6, that signaling 3 further indicates the action information is used as an example. The action information may be determined by the first device based on the signaling 2, or may be determined by the first device. This is not limited in this embodiment of this application.

Optionally, the signaling 3 further indicates mask information.

In an example, when the signaling 3 indicates the mask information, after determining that the first UE meets a second condition, the first UE determines, based on the information about the first flag, whether to access the first device.

S604: The first UE changes a state of a first flag of the first UE.

In this embodiment of this application, for example, a second field of the signaling 3 indicates the action information. State changes corresponding to different values of the second field may be shown in Table 1. It should be noted that Table 1 describes the second field, the state changes, the state, and the like by using examples.

**Table 1**

| Second field | Mask matching | Mask mismatching |
|---|---|---|
| 000 | ->A | ->B |
| 001 | ->A | - |
| 010 | - | ->B |
| 011 | Set to a reversed state (declared -> non-declared, non-declared -> declared, or A -> B, B -> A) | - |
| 100 | ->B | ->A |
| 101 | ->B | - |
| 110 | - | ->A |
| 111 | - | Set to a reversed state (declared -> non-declared, non-declared -> declared, or A -> B, B -> A) |

As shown in Table 1, when the value of the second field in the signaling 3 is 000, if the first UE meets the second condition, the first UE changes (represented by an arrow "->" in Table 1) the state of the first flag to A. If the first UE does not meet the second condition, the state of the first flag of the first UE is changed to B.

When the value of the second field in the signaling 3 is 001, if the first UE meets the second condition, the first UE changes the state of the first flag to A. If the first UE does not meet the second condition, the state of the first flag of the first UE is not changed.

When the value of the second field in the signaling 3 is 010, if the first UE meets the second condition, the first UE does not change the state of the first flag. If the first UE does not meet the second condition, the state of the first flag of the first UE is changed to B.

When the value of the second field in the signaling 3 is 011, if the first UE meets the second condition, the first UE sets the state of the first flag of the first UE to a reversed state. For example, the state is changed from declared to non-declared, or changed from non-declared to declared; or the state is changed from A to B, or changed from B to A. If the first UE does not meet the second condition, the first UE does not change the state of the first flag. It should be noted that declaration and non-declaration are not related to the type of the first flag, that is, a state of any flag of one UE is in either a declared state or a non-declared state.

When the value of the second field in the signaling 3 is 100, if the first UE meets the second condition, the first UE changes the state of the first flag of the first UE to B. If the first UE does not meet the second condition, the first UE changes the state of the first flag to A.

When the value of the second field in the signaling 3 is 101, if the first UE meets the second condition, the first UE changes the state of the first flag to B. If the first UE does not meet the second condition, the first UE does not change the state of the first flag.

When the value of the second field in the signaling 3 is 110, if the first UE meets the second condition, the first UE does not change the state of the first flag. If the first UE does not meet the second condition, the first UE changes the state of the first flag to A.

When the value of the second field in the signaling 3 is 111, if the first UE meets the second condition, the first UE does not change the state of the first flag. If the first UE does not meet the second condition, the first UE sets the state of the first flag to a reversed state. For example, the state is changed from declared to non-declared, or changed from non-declared to declared; or the state is changed from A to B, or changed from B to A.

When the first device does not indicate the action information, the first UE does not need to perform step S604, that is, step S604 is optional.

S605: The first device sends signaling 5. Correspondingly, one or more UEs receive the signaling 5 from the first device. In this embodiment of this application, for example, the first UE receives the signaling 5. For a meaning of the signaling 5, refer to the foregoing descriptions.

In an example, the signaling 5 may be the signaling 3 or the signaling 4. When the signaling 5 is equivalent to the signaling 3, it is equivalent to that the signaling 3 further indicates the maximum time unit range. When the signaling 5 is equivalent to the signaling 4, it is equivalent to that the signaling 4 further indicates the maximum time unit range.

In an example, the maximum time unit range indicated by the signaling 5 may be indicated by the signaling 3 or the signaling 4. In this case, there is no need to perform S605, that is, S605 is an optional step.

S606: The first UE sends a first request to the first device. Correspondingly, the first device receives the first request from the first UE. For a meaning of the first request, refer to the foregoing content.

In this embodiment of this application, descriptions are provided by using an example in which the first UE may determine, based on the signaling 3, whether to access the first device this time. For a manner of determining whether to access the first device, refer to the foregoing content described in Example 6. Details are not described herein.

S607: The first UE sends uplink data to the first device.

The uplink data is, for example, an EPC of the first UE.

It should be noted that S606 and S607 are equivalent to completing this time of access. S606 and S607 are an example of the manner in which the first UE accesses the first device this time. Actually, the first UE accesses the first device this time in a plurality of manners. When the first UE accesses the first device in another manner, there is no need to perform S606 and S607, that is, S606 and S607 are optional steps.

S608: The first device sends signaling 7 to the first UE. Correspondingly, the first UE receives the signaling 7 from the first device.

The signaling 7 indicates a maximum time unit range of the first UE. The signaling 7 in this embodiment of this application may also be referred to as eighth signaling.

It should be noted that the maximum time unit range indicated by the signaling 7 is different from the maximum time unit range indicated by the signaling 5. That the two maximum time unit ranges are different means that the two maximum time unit ranges are not completely-overlapping, or are completely not overlapping.

The first device determines a quantity (also referred to as a first quantity) of UEs that have been paged this time. The first quantity may be understood as a quantity of UEs that are actually paged (inventoried, inventoried, or accessed) by the first device via the signaling 3, or may be understood as a quantity of UEs that are actually paged via the signaling 3 and the signaling 4, or may be further understood as a quantity of UEs that have accessed the first device in a current time of paging (that is, paging via the signaling 3, or paging via the signaling 3 and the signaling 4). For a meaning of a collision, refer to the foregoing descriptions. For example, the first device may determine an amount of successfully-parsed uplink data as the first quantity. If the first quantity is greater than or equal to a first threshold, there is a higher probability that the first UE collides with another UE. Based on this, the first device may send the signaling 7, to reduce collisions between the UEs, and help improve communication reliability.

Alternatively, after receiving the uplink data from the first UE, the first device determines that the uplink data cannot be correctly parsed. In this case, the first device determines that the first UE may collide with another UE. Based on this, the first device may send the signaling 7 to the first UE.

In an example, the first device may not adjust the maximum time unit range of the first UE. In this case, the first device may not perform step S608, that is, S608 is an optional step.

S609: The first UE changes the state of the first flag of the first UE.

After the first UE completes this time of communication (access) with the first device, the first UE may change the state of the first flag of the first UE, to reduce a possibility that the first device triggers the first UE to re-access in the current time of paging. For example, the first UE changes the state of the first flag from the first state to the second state. For a meaning of the current time of paging, refer to the foregoing descriptions.

S610: The first device sends signaling 8. Correspondingly, one or more UEs receive the signaling 8 from the first device. In this embodiment of this application, for example, a second UE receives the signaling 8. The signaling 8 indicates information about a second flag of a UE that is to perform access next time. The information about the second flag indicates that a type of the second flag is the second type and/or a state of the second flag is the second state. The second type may be different from the first type, and the second state may also be different from the first state. The signaling 8 in this embodiment of this application may also be referred to as third signaling.

When the signaling 2 indicates the first device to perform paging for a plurality of times, the first device may continue to initiate a next time of paging after completing one time of paging. In this embodiment of this application, the first device may determine, based on the first quantity, a type of a flag of a UE to be paged next time and/or a state of the flag. For a meaning of the first quantity, refer to the foregoing descriptions.

For example, if the first quantity is greater than or equal to the first threshold, it indicates that the quantity of UEs previously paged is excessively large. If the quantity of UEs paged is excessively large, a collision between UEs is prone to occur. Therefore, the first device determines to adjust a type of a second flag of a UE to be paged next time to the second type, and/or adjust a state of the second flag to the second state. If the first quantity is less than the first threshold, it indicates that a quantity of UEs previously paged is appropriate, and the first device determines that a type of a flag of a UE to be paged next time is the first type, and/or a state of the flag is the first state. In the embodiment shown in FIG. 6, descriptions are provided by using an example in which the type of the second flag of the UE to be paged next time is the second type and/or the state of the flag is the second state.

After receiving the signaling 8, the second UE may determine, based on the signaling 8, whether to access the first device. For a manner of determining, based on the signaling 8, whether to access the first device, refer to the manner of determining, based on the signaling 3, whether to access the first device. Details are not described herein again.

In an example, the signaling 8 may be considered as second-level paging signaling.

It should be noted that to-be-paged UEs determined in the two times of paging initiated by the first device may be completely the same, partially the same, or completely different. For example, if the first device initiates paging to the first UE, and fails to receive the uplink data from the first UE, the first device may re-initiate paging to the first UE. For another example, if the first device initiates paging to the first UE, and receives the uplink data from the first UE, the first device may initiate paging to the second UE. For another example, if the first device initiates paging to the first UE and the second UE, receives the uplink data from the first UE, and does not receive uplink data from the second UE, the first device may re-initiate paging to the second UE.

In an example, the AMF may determine, based on the information about the to-be-paged first flag, information about a second flag of a UE to be paged by the second device, and send the signaling 6 to the second device. For related content such as a meaning of the signaling 6, content in which the AMF determines the information about the second flag, a meaning of the information about the second flag, a relationship between the first device and the second device, a moment at which the AMF sends the signaling 6, and the like, refer to the foregoing content described in the embodiment shown in FIG. 4. Details are not described herein again.

In an example, steps S604 to S610 are all optional steps.

In the embodiment shown in FIG. 6, the first core network device (for example, the AMF) may indirectly indicate the first type and/or the first state via the signaling 2, and the first device may determine the first type and/or the first state based on the signaling 2, to further determine the to-be-paged UE. This provides a mechanism for paging a UE. In addition, because there is no need to specifically determine a specific to-be-paged UE, a paging process may be simplified. In addition, the first device may determine the first type and/or the first state based on an indirect indication of the first core network device, so that the current time of paging by the first device can meet a service requirement, and the first core network device does not need to determine the first type and/or the first state. This helps reduce a processing amount of the first core network device. In addition, the first core network device may indicate, via one piece of signaling, the first device to initiate a plurality of times of paging to a UE. This helps reduce a quantity of times of interaction between the first device and the first core network device.

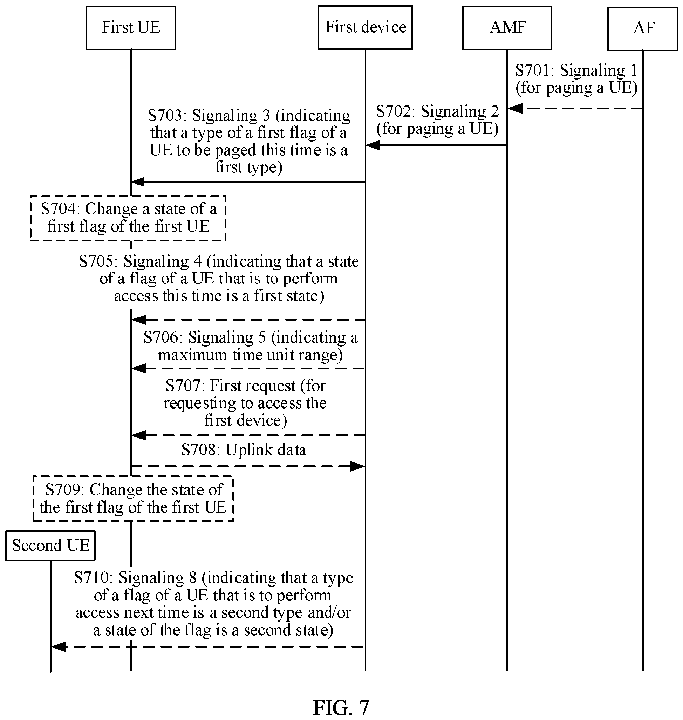

FIG. 7 is a schematic flowchart of a paging method according to an embodiment of this application. FIG. 7 is described by using an example, in the embodiment shown in FIG. 4, in which the signaling 2 does not indicate the first type and/or the first state, an example in which the signaling 3 indicates the first type, and an example, in the embodiment shown in FIG. 4, in which the first device determines the information about the flag of the to-be-paged UE (that is, determines the first type in Manner 2).

S701: An AF sends signaling 1 to an AMF. Correspondingly, the AMF receives the signaling 1 from the AF. The signaling 1 is for paging a UE.

Optionally, the signaling 1 may indicate quantity-of-times information. For a meaning of the quantity-of-times information, refer to the foregoing content.

In an example, the AMF may directly page a UE without being triggered by another core network device (for example, the AF). In this case, there is no need to perform S701, that is, S701 is an optional step.

S702: The AMF sends signaling 2 to a first device. The first device receives the signaling 2 from the AMF. The signaling 2 is for paging a UE. Optionally, the signaling 2 may indicate quantity-of-times information. For a meaning of the quantity-of-times information, refer to the foregoing content.

For a manner in which the AMF sends the signaling 2 to the first device, refer to the foregoing descriptions. Details are not described herein again.

In another possible implementation, a first core network device may be an SMF. In this case, the AMF in S701 and S702 may be replaced with the SMF.

S703: The first device sends signaling 3. Correspondingly, one or more UEs receive the signaling 3 from the first device. The signaling 3 indicates that a type of a flag of a to-be-paged UE is a first type.

In this embodiment of this application, descriptions are provided by using an example in which the signaling 2 does not indicate the first type. In this case, the first device may determine the first type. The first device may determine the first type in any one of the sub-manner A1 to the sub-manner A3. This is not limited in this embodiment of this application.

For example, the first device determines a state of a type of a first flag as an initial state.

For another example, the first device determines a state of a type of a first flag as an initial state, and determines a first state as an initial state of the first flag. In other words, it is equivalent to that the first device selects a UE in the first state for access.

In this embodiment of this application, the signaling 3 further indicates action information. For a meaning of the action information and a manner in which the first device determines the action information, refer to the foregoing descriptions.

Optionally, the signaling 3 further indicates mask information.

Optionally, when the signaling 3 indicates the mask information, after determining that the first UE meets a second condition, the first UE determines, based on the information about the first flag, whether to access the first device.

S704: The first UE changes a state of a first flag of the first UE.

The first UE changes the state of the flag of the first UE based on an indication of the signaling 3. For a manner of changing the state of the flag of the first UE, refer to the foregoing descriptions.

S705: The first device sends signaling 4. Correspondingly, one (for example, the first UE) or more UEs receive the signaling 4 from the first device. In this embodiment of this application, the signaling 4 indicates that a state of the flag of the to-be-paged UE is the first state.

It should be noted that S705 and S703 may be performed in any sequence. For example, S703 is performed before S704; or S704 is performed before S703. The signaling 4 is optional signaling. When the signaling 3 includes only some information of the first flag, for example, includes only the action information and flag information, the fourth signaling may be sent.

S706: The first device sends signaling 5 to the first UE. Correspondingly, the first UE receives the signaling 5 from the first device. For a meaning of the signaling 5, refer to the foregoing descriptions.

S707: The first UE sends a first request to the first device. Correspondingly, the first device receives the first request from the first UE. The first request is for requesting to access the first device.

For content of the first request, refer to the foregoing content. Details are not described herein.

S708: The first UE sends uplink data to the first device. Correspondingly, the first device receives the uplink data from the first UE. For a meaning of the uplink data, refer to the foregoing descriptions.

In a possible implementation, the first device sends signaling 7 to the first UE. Correspondingly, the first UE receives the signaling 7 from the first device. For content of the signaling 7, refer to the foregoing content.

S709: The first UE changes the state of the first flag of the first UE.

For a manner in which the first UE changes the state of the first flag of the first UE, refer to the foregoing descriptions.

S710: The first device sends signaling 8. One or more UEs receive the signaling 8. In this embodiment of this application, for example, a second UE receives the signaling 8. It should be noted that the second UE may be the same as or different from the first UE. The signaling 8 indicates information about a second flag of a UE to be paged next time. The information about the second flag indicates that a type of the second flag is the second type and/or a state of the flag is the second state. For a meaning of the signaling 8, refer to the foregoing descriptions.

For a manner in which the first device determines the second type and/or the second state, refer to the foregoing content. For a manner in which the second UE determines, based on the signaling 8, whether to access the first device, refer to the foregoing content.

In an example, the first core network device may determine, based on the information about the first flag, information about a second flag of a UE to be paged by the second device, and send the signaling 6 to the second device. For related content such as a meaning of the signaling 6, content in which the AMF determines the information about the second flag, a meaning of the information about the second flag, a relationship between the first device and the second device, a moment at which the AMF sends the signaling 6, and the like, refer to the foregoing content described in the embodiment shown in FIG. 4. Details are not described herein again.

In an example, the first device may not need to perform steps S704 to S710, that is, S704 to S710 are optional steps.

In the embodiment shown in FIG. 7, the first core network device (for example, the AMF) does not need to indicate the first type and/or the first state, and the first device may determine the first type and/or the first state, to page a UE. This provides a mechanism for paging a UE. In addition, a to-be-paged UE does not need to be specifically determined, so that a process of paging a UE may be simplified. In addition, the first device may determine the first type and/or the first state. This reduces a processing amount of the first core network device. In addition, the first device may determine a to-be-paged UE based on the signaling 3, and determine, via the signaling 4, a UE that performs access this time, so that the first device can flexibly determine a state of a flag of the to-be-paged UE. In addition, the first device may further adjust, based on a status of paging the UE this time, a type of a flag of a UE to be paged next time and/or a state of the flag. This helps the first device determine a UE that better meets a service requirement, and also improves flexibility of triggering UE access by the first device.

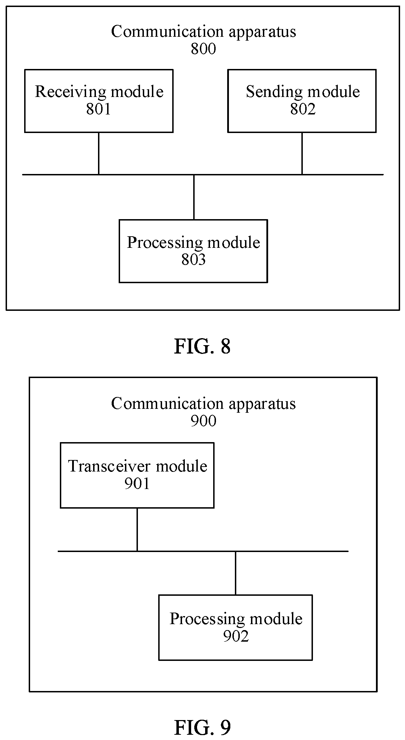

FIG. 8 is a diagram of a structure of a possible communication apparatus according to an embodiment of this application. As shown in FIG. 8, the communication apparatus 800 includes a receiving module 801, a sending module 802, and a processing module 803. The processing module 803 is an optional module. The communication apparatus 800 may be configured to implement functions of the first device in FIG. 4, FIG. 6, or FIG. 7, and therefore can also achieve beneficial effects of the foregoing method embodiments.

For example, the receiving module 801 is configured to receive first signaling from a first core network device, and the sending module 802 is configured to send second signaling to the first device. For content of the first signaling and the second signaling, refer to the foregoing descriptions. Optionally, the processing module 803 may be configured to determine a first type and/or a first state.

For example, when the communication apparatus 800 performs the embodiment shown in FIG. 4, the receiving module 801 may implement step S402, and the sending module 802 may implement step S403.

For another example, when the communication apparatus 800 performs the embodiment shown in FIG. 6, the receiving module 801 may implement step S602, and the sending module 802 may implement step S603.

For another example, when the communication apparatus 800 performs the embodiment shown in FIG. 7, the receiving module 801 may implement step S702, and the sending module 802 may implement step S703.

FIG. 9 is a diagram of a structure of a possible communication apparatus according to an embodiment of this application. As shown in FIG. 9, the communication apparatus 900 includes a transceiver module 901 and a processing module 902. The communication apparatus 900 may be configured to implement functions of a first terminal device (for example, the first UE) in FIG. 4, FIG. 6, or FIG. 7, and therefore can also achieve beneficial effects of the foregoing method embodiments.

For example, the transceiver module 901 may be configured to receive, under control of the processing module 902, second signaling from a first device. For content of the second signaling, refer to the foregoing descriptions. Optionally, the processing module 902 may be configured to change a state of a flag of the first UE.

For example, when the communication apparatus 900 performs the embodiment shown in FIG. 4, the transceiver module 901 may implement step S403.

For another example, when the communication apparatus 900 performs the embodiment shown in FIG. 6, the transceiver module 901 may implement step S603.

For another example, when the communication apparatus 900 performs the embodiment shown in FIG. 7, the transceiver module 901 may implement step S703.

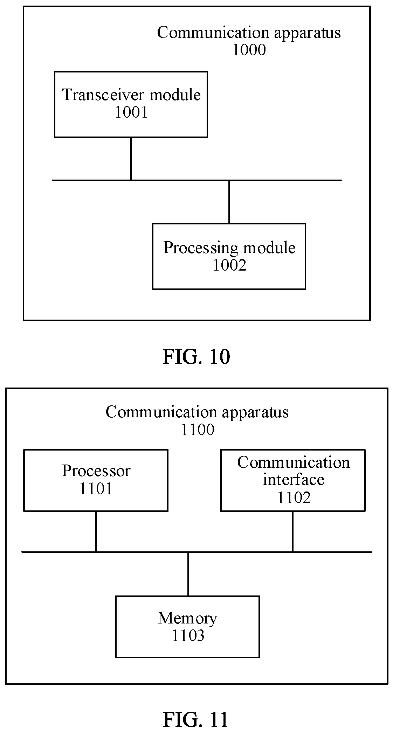

FIG. 10 is a diagram of a structure of a possible communication apparatus according to an embodiment of this application. As shown in FIG. 10, the communication apparatus 1000 includes a transceiver module 1001 and a processing module 1002. The communication apparatus 1000 may be configured to implement functions of the first core network device (for example, the AF) in FIG. 4, FIG. 6, or FIG. 7, and therefore can also achieve beneficial effects of the foregoing method embodiments.

For example, the transceiver module 1001 is configured to send first signaling to a first device. For another example, the transceiver module 1001 is configured to receive seventh signaling from a second core network device. For content of the seventh signaling, refer to the foregoing descriptions. Optionally, the processing module 1002 is configured to determine a first type and/or a first state.

For example, when the communication apparatus 1000 performs the embodiment shown in FIG. 4, the transceiver module 1001 may implement step S401 and step S402.

For another example, when the communication apparatus 1000 performs the embodiment shown in FIG. 6, the transceiver module 1001 may implement step S601 and step S602.

For another example, when the communication apparatus 1000 performs the embodiment shown in FIG. 7, the transceiver module 1001 may implement step S701 and step S702.

FIG. 11 is a diagram of a structure of a possible communication apparatus according to an embodiment of this application. As shown in FIG. 11, the communication apparatus 1100 includes a processor 1101 and a communication interface 1102. The processor 1101 and the communication interface 1102 are coupled to each other. It may be understood that the communication interface 1102 may be a transceiver or an input/output interface. Optionally, the communication apparatus 1100 may further include a memory 1103, configured to store instructions to be executed by the processor 1101, or store input data required by the processor 1101 to run instructions, or store data generated after the processor 1101 runs instructions.

Optionally, the communication apparatus 1100 may be configured to implement functions of the first device in any one of the foregoing embodiments, or may be configured to implement functions of the communication apparatus 800 shown in FIG. 8.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

In an example, the processor 1101 and the memory 1103 may be coupled.

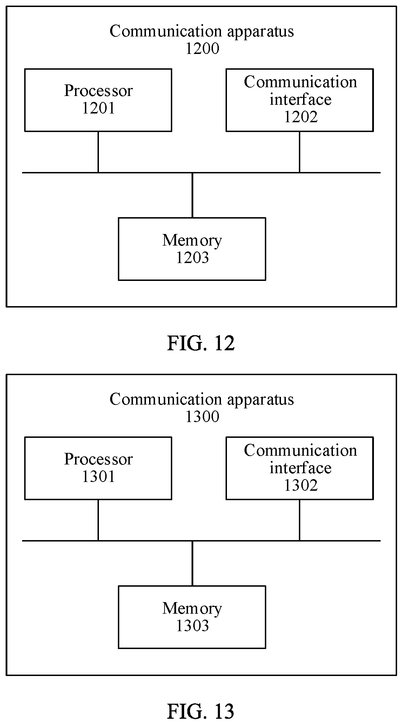

FIG. 12 is a diagram of a structure of a possible communication apparatus according to an embodiment of this application. As shown in FIG. 12, the communication apparatus 1200 includes a processor 1201 and a communication interface 1202. The processor 1201 and the communication interface 1202 are coupled to each other. It may be understood that the communication interface 1202 may be a transceiver or an input/output interface. Optionally, the communication apparatus 1200 may further include a memory 1203, configured to store instructions executed by the processor 1201, or store input data required by the processor 1201 to run instructions, or store data generated after the processor 1201 runs instructions.

Optionally, the communication apparatus 1200 may be configured to implement functions of the first terminal device (for example, the first UE) in any one of the foregoing embodiments, or may be configured to implement functions of the communication apparatus 900 shown in FIG. 9.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

In an example, the processor 1201 and the memory 1203 may be coupled.

FIG. 13 is a diagram of a structure of a possible communication apparatus according to an embodiment of this application. As shown in FIG. 13, the communication apparatus 1300 includes a processor 1301 and a communication interface 1302. The processor 1301 and the communication interface 1302 are coupled to each other. It may be understood that the communication interface 1302 may be a transceiver or an input/output interface. Optionally, the communication apparatus 1300 may further include a memory 1303, configured to store instructions executed by the processor 1301, store input data needed by the processor 1301 to run instructions, or store data generated after the processor 1301 runs instructions.

Optionally, the communication apparatus 1300 may be configured to implement functions of the first core network device (for example, the AMF) in any one of the foregoing embodiments, or may be configured to implement functions of the communication apparatus 1000 shown in FIG. 10.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

In an example, the processor 1301 and the memory 1303 may be coupled.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A paging method, wherein the method is applied to a first device, and comprises:
receiving first signaling from a first core network device, wherein the first signaling is for paging a terminal device; and
sending second signaling, wherein the second signaling indicates information about a first flag of a to-be-paged terminal device, the information about the first flag indicates that a type of the first flag is a first type and/or a state of the first flag is a first state, and the information about the first flag is for determining the to-be-paged terminal device.

2. The method according to claim 1, wherein the first signaling further indicates the first type and/or the first state.

3. The method according to claim 2, wherein the first signaling comprises at least one of the following information:
frequency information, wherein the frequency information indicates a frequency at which the first device pages a terminal device;
quantity-of-times information, wherein the quantity-of-times information indicates a quantity of times that the first device pages a terminal device;
accuracy information, wherein the accuracy information indicates a ratio of a quantity of terminal devices that are successfully paged by the first device to a quantity of terminal devices that are paged by the first device;
quantity information, wherein the quantity information indicates an order of magnitude of a terminal device expected to be paged by the first device; or
paging time information, wherein the paging time information indicates start time and/or end time at which the first device performs paging.

4. The method according to claim 1, wherein the method further comprises:
randomly determining, from a plurality of types of flags, a type as the first type; and/or
the first state being an initial state of the first flag.

5. The method according to any one of claims 1 to 4, wherein the method further comprises:
sending third signaling based on a first quantity of terminal devices paged by the first device via the second signaling, wherein the third signaling indicates information about a second flag of a terminal device to be paged next time, the information about the second flag comprises that a type of the second flag is a second type and/or a state of the second flag is a second state, and the third signaling is for determining the terminal device to be paged next time.

6. The method according to any one of claims 1 to 5, wherein the second signaling further indicates action information, and the action information indicates to change the state of the first flag of the terminal device.

7. The method according to any one of claims 1 to 5, wherein the method further comprises: sending fourth signaling, wherein the fourth signaling indicates action information, and the action information indicates to change the state of the first flag of the terminal device, and/or indicates that the state of the first flag is the first state.

8. The method according to any one of claims 1 to 7, wherein the second signaling further indicates a maximum time unit range in which the to-be-paged terminal device sends data to the first device; or the method further comprises: sending fifth signaling, wherein the fifth signaling indicates a maximum time unit range in which the to-be-paged terminal device sends data to the first device.

9. The method according to claim 2 or 3, wherein the first signaling is non-access stratum signaling.

10. A paging method, wherein the method is applied to a first terminal device, and comprises:
receiving second signaling from a first device, wherein the second signaling indicates information about a first flag of a to-be-paged terminal device, the information about the first flag indicates that a type of the first flag is a first type and/or a state of the first flag is a first state, and the information about the first flag is for determining the to-be-paged terminal device.

11. The method according to claim 10, wherein the second signaling indicates to change the state of the first flag of the terminal device.

12. The method according to claim 10, wherein the method further comprises:
receiving fourth signaling from the first device, wherein the fourth signaling indicates action information, and the action information indicates to change the state of the first flag of the terminal device, and/or indicates that the state of the first flag is the first state.

13. The method according to any one of claims 10 to 12, wherein the method further comprises:
receiving third signaling from the first device, wherein the third signaling indicates information about a second flag of a terminal device to be paged next time, the information about the second flag comprises that a type of the second flag is a second type and/or a state of the second flag is a second state, the third signaling is for determining the terminal device to be paged next time, and the information about the second flag is determined based on a first quantity of terminal devices paged by the first device via the second signaling.

14. A paging method, wherein the method is applied to a first core network device, and comprises:
sending first signaling to a first device, wherein the first signaling indicates information about a first flag, the information about the first flag indicates that a type of the first flag is a first type and/or a state of the first flag is a first state, and the information about the first flag is for determining a to-be-paged terminal device.

15. The method according to claim 14, wherein the first signaling comprises at least one of the following information:
frequency information, wherein the frequency information indicates a frequency at which the first device pages a terminal device;
quantity-of-times information, wherein the quantity-of-times information indicates a quantity of times that the first device pages a terminal device;
accuracy information, wherein the accuracy information indicates a ratio of a quantity of terminal devices that are successfully paged by the first device to a quantity of terminal devices that are paged by the first device;
quantity information, wherein the quantity information indicates an order of magnitude of a terminal device expected to be paged by the first device; or
paging time information, wherein the paging time information indicates start time and/or end time at which the first device performs paging.

16. The method according to claim 14 or 15, wherein the first signaling is non-access stratum signaling.

17. The method according to any one of claims 14 to 16, wherein the method further comprises:
sending sixth signaling to a second device, wherein the sixth signaling indicates information about a second flag of the to-be-paged terminal device, the information about the second flag indicates that a type of the second flag is a second type and/or a state of the second flag is a second state, the information about the second flag is for determining the to-be-paged terminal device, and the information about the second flag is determined based on the information about the first flag.

18. A communication apparatus, comprising:
a receiving module, configured to receive first signaling from a first core network device, wherein the first signaling is for paging a terminal device; and
a sending module, configured to send second signaling, wherein the second signaling indicates information about a first flag of a to-be-paged terminal device, the information about the first flag indicates that a type of the first flag is a first type and/or a state of the first flag is a first state, and the information about the first flag is for determining the to-be-paged terminal device.

19. A communication apparatus, comprising a processing module and a transceiver module, wherein
the transceiver module is configured to receive, under control of the processing module, second signaling from a first device, wherein the second signaling indicates information about a first flag of a to-be-paged terminal device, the information about the first flag indicates that a type of the first flag is a first type and/or a state of the first flag is a first state, and the information about the first flag is for determining the to-be-paged terminal device.

20. A communication apparatus, comprising a processing module and a transceiver module, wherein
the transceiver module is configured to send, under control of the processing module, first signaling to a first device, wherein the first signaling indicates information about a first flag, the information about the first flag indicates that a type of the first flag is a first type and/or a state of the first flag is a first state, and the information about the first flag is for determining a to-be-paged terminal device.

21. A communication apparatus, comprising a processor and a communication interface, wherein the communication interface is configured to receive a signal from a communication apparatus other than the communication apparatus and transmit the signal to the processor, or send a signal from the processor to a communication apparatus other than the communication apparatus, and the processor is configured to implement the method according to any one of claims 1 to 17 by using a logic circuit or executing code instructions.

22. A computer-readable storage medium, wherein the computer-readable storage medium stores a computer program or instructions, and when the computer program or the instructions are executed by a communication apparatus, the method according to any one of claims 1 to 17 is implemented.
